(19) Europäisches Patentamt
European Patent Office
Office européen des brevets

(11) **EP 4 572 172 A1**

(12) **EUROPEAN PATENT APPLICATION**
published in accordance with Art. 153(4) EPC

(43) Date of publication:
**18.06.2025 Bulletin 2025/25**

(21) Application number: **23859248.9**

(22) Date of filing: **24.08.2023**

(51) International Patent Classification (IPC):
**H04B 7/06** (2006.01)

(52) Cooperative Patent Classification (CPC):
**H04B 7/06**

(86) International application number:
**PCT/CN2023/114808**

(87) International publication number:
**WO 2024/046215 (07.03.2024 Gazette 2024/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.08.2022 CN 202211036042**

(71) Applicant: **Huawei Technologies Co., Ltd.
Shenzhen, Guangdong 518129 (CN)**

(72) Inventors:
• **CHEN, Jiaxuan
Shenzhen, Guangdong 518129 (CN)**
• **HANG, Haicun
Shenzhen, Guangdong 518129 (CN)**
• **WANG, Xiaohan
Shenzhen, Guangdong 518129 (CN)**

(74) Representative: **Gill Jennings & Every LLP
The Broadgate Tower
20 Primrose Street
London EC2A 2ES (GB)**

(54) **COMMUNICATION METHOD AND APPARATUS**

(57) The present invention provides a communication method and apparatus, to reduce CSI feedback overheads of a plurality of frequency bands. The method includes: inputting channel information of a first frequency band and channel information of K second frequency bands to a first encoder, to determine first channel state indication information corresponding to the first frequency band, where the channel information of the K second frequency bands is correlated with the channel information of the first frequency band, and K is a positive integer; and sending the first channel state indication information.

FIG. 5

**Description**

CROSS-REFERENCE TO RELATED APPLICATIONS

This application claims priority to Chinese Patent Application No. 202211036042.1, filed with the China National Intellectual Property Administration on August 27, 2022 and entitled "COMMUNICATION METHOD AND APPARATUS", which is incorporated herein by reference in its entirety.

TECHNICAL FIELD

This disclosure relates to the field of communication technologies, and in particular, to a communication method and apparatus.

BACKGROUND

In a wireless communication network, for example, in a mobile communication network, services supported by the network are increasingly diversified, and therefore requirements that need to be met are increasingly diversified. For example, the network needs to be capable of supporting an ultra-high rate, an ultra-low latency, and/or an ultra-large connection. This feature makes network planning, network configuration, and/or resource scheduling increasingly complex. In addition, because the network has increasingly powerful functions, for example, supports an increasingly high spectrum and new technologies such as a high-order multiple-input multiple-output (multiple-input multiple-output, MIMO) technology, beamforming, and/or beam management, network energy saving becomes a hot research topic. These new requirements, scenarios, and features bring unprecedented challenges to network planning, operation and maintenance, and efficient operation. To meet these challenges, an artificial intelligence technology can be introduced into the wireless communication network, to implement network intelligence. In view of this, how to effectively implement artificial intelligence in the network is a problem worth studying.

SUMMARY

This disclosure provides a communication method and apparatus, to reduce channel state information (channel state information, CSI) feedback overheads of a plurality of frequency bands through artificial intelligence.

According to a first aspect, this disclosure provides a communication method, and the communication method is applied to a terminal device. The communication method includes: The terminal device inputs channel information of a first frequency band and channel information of K second frequency bands to a first encoder, to determine first channel state indication information corresponding to the first frequency band, where the channel information of the K second frequency bands is correlated with the channel information of the first frequency band, and K is a positive integer; and the terminal device sends the first channel state indication information to a network device.

In such a design, channel correlation between a plurality of frequency bands is used, to reduce a waste of resources caused by repeated transmission of same information between the plurality of frequency bands, and CSI feedback overheads of a single frequency band can be reduced. For example, it may be understood that a sequence length corresponding to the first channel state indication information is less than a sequence length corresponding to second channel state indication information, and the second channel state indication information indicates compressed information of the channel information of the first frequency band.

In a possible design, the terminal device may further receive first information from a network device, where the first information indicates one or more of the following: The channel information of the K second frequency bands is capable of being used to determine the first channel state indication information; the channel information of the K second frequency bands is correlated with the channel information of the first frequency band; and the channel information of the K second frequency bands is capable of being used to restore the channel information of the first frequency band. Optionally, the first information includes identifiers of the K second frequency bands and an identifier of the first frequency band.

Based on such a design, the terminal device may quickly determine, based on the indication of the network device, the K second frequency bands that have channel correlation with the first frequency band, so that CSI feedback efficiency can be improved.

In a possible design, the terminal device may further compress the channel information of the K second frequency bands, to determine channel state indication information corresponding to the K second frequency bands; and further, the terminal device may send, to the network device, the channel state indication information corresponding to the K second frequency bands. In such a design, when the CSI feedback overheads of the first frequency band are reduced, the complete compressed CSI is fed back on the K second frequency bands, so that it can be ensured that the network device restores the complete CSI of the first frequency band based on the channel correlation between the plurality of frequency bands.

In a possible design, the terminal device inputs, to a first model, a downlink reference signal received on the K second frequency bands, to obtain the channel information of the K second frequency bands. In such a design, channel estimation is performed by using the AI model, so that nonlinear transformation processing can be added, and a channel is closer to a real channel, thereby improving channel estimation effect.

In a possible design, the channel information of the K second frequency bands is correlated with channel information of a third frequency band used for uplink transmission, and the terminal device may further send an uplink reference signal on the third frequency band based on the channel information of the K second frequency bands. In such a design, a transmission mode of an uplink reference signal on a single frequency band can be determined based on the channel correlation between the plurality of frequency bands. For example, a quantity of sent uplink reference signals can be reduced, thereby reducing signaling overheads.

In a possible design, the terminal device may further receive second information from the network device, where the second information indicates one or more of the following: The channel information of the K second frequency bands is capable of being used to determine a transmission mode of the uplink reference signal on the third frequency band; the channel information of the K second frequency bands is correlated with the channel information of the third frequency band; and the channel information of the K second frequency bands is capable of being used to estimate the channel information of the third frequency band. Based on such a design, the terminal device can quickly determine, based on the indication of the network device, the K second frequency bands that have channel correlation with the third frequency band, so that efficiency of sending the uplink reference signal on the third frequency band can be improved.

According to a second aspect, this disclosure provides a communication method, and the communication method is applied to a network device. The communication method includes: The network device receives first channel state indication information from a terminal device, where the first channel state indication information corresponds to a first frequency band, channel information of the first frequency band is correlated with channel information of K second frequency bands, and K is a positive integer; and the network device inputs the first channel state indication information and the channel information of the K second frequency bands to a first decoder, to restore the channel information of the first frequency band.

A sequence length corresponding to the first channel state indication information is less than a sequence length corresponding to second channel state indication information, and the second channel state indication information indicates compressed information of the channel information of the first frequency band.

In a possible design, the network device may further send first information to the terminal device, where the first information indicates one or more of the following: The channel information of the K second frequency bands is capable of being used to determine the first channel state indication information; the channel information of the K second frequency bands is correlated with the channel information of the first frequency band; and the channel information of the K second frequency bands is capable of being used to restore the channel information of the first frequency band. Optionally, the first information includes identifiers of the K second frequency bands and an identifier of the first frequency band.

In a possible design, the network device may further receive, from the terminal device, channel state indication information corresponding to the K second frequency bands; and input, to a second model, the channel state indication information corresponding to the K second frequency bands, to obtain the channel information of the K second frequency bands. Channel restoration is performed by using the AI model, so that nonlinear transformation processing can be added, and a channel is closer to a real channel, thereby improving channel restoration effect.

In a possible design, the network device may further send a downlink reference signal on the first frequency band based on the channel information of the K second frequency bands. In such a design, a transmission mode of a downlink reference signal corresponding to a single frequency band can be determined based on channel correlation between a plurality of frequency bands. For example, a quantity of sent downlink reference signals can be reduced, thereby reducing signaling overheads.

In a possible design, the network device may further receive an uplink reference signal from the terminal device on a third frequency band, where channel information of the third frequency band is correlated with the channel information of the K second frequency bands; and estimate the channel information of the third frequency band based on the uplink reference signal and the channel information of the K second frequency bands.

In a possible design, the network device may further send second information to the terminal device, where the second information indicates one or more of the following: The channel information of the K second frequency bands is capable of being used to determine a transmission mode of the uplink reference signal on the third frequency band; the channel information of the K second frequency bands is correlated with the channel information of the third frequency band; and the channel information of the K second frequency bands is capable of being used to estimate the channel information of the third frequency band.

According to a third aspect, this disclosure provides a communication apparatus. The communication apparatus may be a terminal device, may be an apparatus, a module, a chip, or the like in a terminal device, or may be an apparatus that can be used together with a terminal device. In a design, the communication apparatus may include modules that one-to-one correspond to the method/operations/steps/actions according to the first aspect. The module may be implemented by a hardware circuit, software, or a combination of the hardware circuit and the software. In a design, the communication apparatus may include a processing module and a communication module. An example is as follows:

The processing module is configured to input channel information of a first frequency band and channel information of K second frequency bands to a first encoder, to determine first channel state indication information corresponding to the first frequency band, where the channel information of the K second frequency bands is correlated with the channel information of the first frequency band, and K is a positive integer; and
the communication module is configured to send the first channel state indication information.

A sequence length corresponding to the first channel state indication information is less than a sequence length corresponding to second channel state indication information, and the second channel state indication information indicates compressed information of the channel information of the first frequency band.

In a possible design, the communication module is further configured to receive first information from a network device, where the first information indicates one or more of the following: The channel information of the K second frequency bands is capable of being used to determine the first channel state indication information; the channel information of the K second frequency bands is correlated with the channel information of the first frequency band; and the channel information of the K second frequency bands is capable of being used to restore the channel information of the first frequency band. Optionally, the first information includes identifiers of the K second frequency bands and an identifier of the first frequency band.

In a possible design, the processing module is further configured to compress the channel information of the K second frequency bands, to determine channel state indication information corresponding to the K second frequency bands; and the communication module is further configured to send the channel state indication information corresponding to the K second frequency bands.

In a possible design, the processing module is further configured to input, to a first model, a downlink reference signal received on the K second frequency bands, to obtain the channel information of the K second frequency bands.

In a possible design, the channel information of the K second frequency bands is correlated with channel information of a third frequency band used for uplink transmission, and the processing module is further configured to send an uplink reference signal on the third frequency band based on the channel information of the K second frequency bands.

In a possible design, the communication module is further configured to receive second information from the network device, where the second information indicates one or more of the following: The channel information of the K second frequency bands is capable of being used to determine a transmission mode of the uplink reference signal on the third frequency band; the channel information of the K second frequency bands is correlated with the channel information of the third frequency band; and the channel information of the K second frequency bands is capable of being used to estimate the channel information of the third frequency band.

According to a fourth aspect, this disclosure provides a communication apparatus. The communication apparatus may be a network device, may be an apparatus, a module, a chip, or the like in a network device, or may be an apparatus that can be used together with a network device. In a design, the communication apparatus may include modules that one-to-one correspond to the method/operations/steps/actions according to the second aspect. The module may be implemented by a hardware circuit, software, or a combination of the hardware circuit and the software. In a design, the communication apparatus may include a processing module and a communication module. An example is as follows:

The communication module is configured to receive first channel state indication information from a terminal device, where the first channel state indication information corresponds to a first frequency band, channel information of the first frequency band is correlated with channel information of K second frequency bands, and K is a positive integer; and
the processing module is configured to input the first channel state indication information and the channel information of the K second frequency bands to a first decoder, to restore the channel information of the first frequency band.

A sequence length corresponding to the first channel state indication information is less than a sequence length corresponding to second channel state indication information, and the second channel state indication information indicates compressed information of the channel information of the first frequency band.

In a possible design, the communication module is further configured to send first information, where the first information indicates one or more of the following: The channel information of the K second frequency bands is capable of being used to determine the first channel state indication information; the channel information of the K second frequency bands is correlated with the channel information of the first frequency band; and the channel information of the K second frequency bands is capable of being used to restore the channel information of the first frequency band. Optionally, the first information includes identifiers of the K second frequency bands and an identifier of the first frequency band.

In a possible design, the communication module is further configured to receive, from the terminal device, channel state indication information corresponding to the K second frequency bands; and the processing module is further configured to input, to a second model, the channel state indication information corresponding to the K second frequency bands, to obtain the channel information of the K second frequency bands.

In a possible design, the processing module is further configured to send a downlink reference signal on the first frequency band based on the channel information of the K second frequency bands.

In a possible design, the communication module is further configured to receive an uplink reference signal from the terminal device on a third frequency band, where channel information of the third frequency band is correlated with the channel information of the K second frequency bands; and the processing module is further configured to estimate the channel information of the third frequency band based on the uplink reference signal and the channel information of the K second frequency bands.

In a possible design, the communication module is further configured to send second information, where the second information indicates one or more of the following: The channel information of the K second frequency bands is capable of being used to determine a transmission mode of the uplink reference signal on the third frequency band; the channel information of the K second frequency bands is correlated with the channel information of the third frequency band; and the channel information of the K second frequency bands is capable of being used to estimate the channel information of the third frequency band.

According to a fifth aspect, this disclosure provides a communication apparatus. The communication apparatus includes a processor, configured to implement the method according to the first aspect. The processor is coupled to a memory. The memory is configured to store instructions and data. When the processor executes the instructions stored in the memory, the method according to the first aspect may be implemented. Optionally, the communication apparatus may further include the memory. The communication apparatus may further include a communication interface. The communication interface is used by the apparatus to communicate with another device. For example, the communication interface may be a transceiver, a circuit, a bus, a module, a pin, or another type of communication interface.

In a possible design, the communication apparatus includes:

a memory storing instructions;
a processor, configured to input channel information of a first frequency band and channel information of K second frequency bands to a first encoder, to determine first channel state indication information corresponding to the first frequency band, where the channel information of the K second frequency bands is correlated with the channel information of the first frequency band, and K is a positive integer; and
a communication interface, configured to send the first channel state indication information.

According to a sixth aspect, this disclosure provides a communication apparatus. The communication apparatus includes a processor, configured to implement the method according to the second aspect. The processor is coupled to a memory. The memory is configured to store instructions and data. When the processor executes the instructions stored in the memory, the method according to the second aspect may be implemented. Optionally, the communication apparatus may further include the memory. The communication apparatus may further include a communication interface. The communication interface is used by the apparatus to communicate with another device. For example, the communication interface may be a transceiver, a circuit, a bus, a module, a pin, or another type of communication interface.

In a possible design, the communication apparatus includes:

a memory storing instructions;
a communication interface, configured to receive first channel state indication information from a terminal device, where the first channel state indication information corresponds to a first frequency band, channel information of the first frequency band is correlated with channel information of K second frequency bands, and K is a positive integer; and
a processor, configured to input the first channel state indication information and the channel information of the K second frequency bands to a first decoder, to restore the channel information of the first frequency band.

According to a seventh aspect, this disclosure provides a communication system, including a terminal device that can implement the method according to the first aspect and a network device that can implement the method according to the second aspect.

According to an eighth aspect, this disclosure further provides a computer program. When the computer program is run on a computer, the computer is enabled to perform the method according to either of the first aspect or the second aspect. For example, the computer may be a terminal device or a network device.

According to a ninth aspect, this disclosure further provides a computer program product, including instructions. When the instructions are run on a computer, the computer is enabled to perform the method according to either of the first aspect or the second aspect.

According to a tenth aspect, this disclosure further provides a computer-readable storage medium. The computer-readable storage medium stores a computer program or instructions, and when the computer program or the instructions are run on a computer, the computer is enabled to perform the method according to either of the first aspect or the second aspect.

According to an eleventh aspect, this disclosure further provides a chip. The chip is configured to read a computer program stored in a memory, to perform the method according to either of the first aspect or the second aspect. Alternatively, the chip includes a circuit configured to perform the method according to either of the first aspect or the second aspect.

According to a twelfth aspect, this disclosure further provides a chip system. The chip system includes a processor, configured to support an apparatus in implementing the method according to either of the first aspect or the second aspect. In a possible design, the chip system further includes a memory, and the memory is configured to store a program and data that are necessary for the apparatus. The chip system may include a chip, or may include a chip and another discrete component.

For effect of the solutions provided in any one of the second aspect to the twelfth aspect, refer to the corresponding descriptions in the first aspect.

BRIEF DESCRIPTION OF DRAWINGS

FIG. 1 is a diagram of a structure of a communication system;

FIG. 2A is a diagram of a neuron structure;

FIG. 2B is a diagram of a layer relationship of a neural network;

FIG. 2C is a diagram of an AI application framework according to this disclosure;

FIG. 3 is a diagram of a structure of another communication system;

FIG. 4A to FIG. 4D are diagrams of several network architectures;

FIG. 5 is a schematic flowchart of a communication method according to this disclosure;

FIG. 6 is a diagram of model application according to this disclosure;

FIG. 7 is a schematic flowchart of a communication method according to this disclosure;

FIG. 8 is a diagram of model application according to this disclosure;

FIG. 9 is a schematic flowchart of a communication method according to this disclosure;

FIG. 10 is a diagram of model application according to this disclosure;

FIG. 11 is a diagram of a structure of a communication apparatus according to this disclosure; and

FIG. 12 is a diagram of a structure of a communication apparatus according to this disclosure.

DESCRIPTION OF EMBODIMENTS

To make objectives, technical solutions, and advantages of this disclosure clearer, the following further describes this disclosure in detail with reference to accompanying drawings.

"At least one piece (item)" described in this disclosure below indicates one piece (item) or more pieces (items). A plurality of (items) indicates two or more (items). A term "and/or" describes an association relationship between associated objects and indicates that three relationships may exist. For example, A and/or B may indicate the following three cases: Only A exists, both A and B exist, and only B exists. A character "/" usually indicates an "or" relationship between the associated objects. In addition, it should be understood that although terms such as first and second may be used in this disclosure to describe objects, these objects are not limited by these terms. These terms are merely used to distinguish the objects from each other.

Terms "include" and "have" and any variant thereof mentioned in descriptions of this disclosure below are intended to cover non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that in this disclosure, terms such as "example" or "for example" indicates giving an example, an illustration, or a description. Any method or design solution described as "example" or "for example" in this disclosure should not be explained as being more preferred or having more advantages than another method or design solution. Exactly, use of the words such as "example" or "for example" is intended to present a relative concept in a specific manner.

Technologies provided in this disclosure may be applied to various communication systems. For example, the communication system may be a 3rd generation (3rd generation, 3G) communication system (for example, a universal mobile telecommunications system (universal mobile telecommunications system, UMTS)), a 4th generation (4th generation, 4G) communication system (for example, a long term evolution (long term evolution, LTE) system), a 5th generation (5th generation, 5G) communication system, a worldwide interoperability for microwave access (worldwide interoperability for microwave access, WiMAX) or a wireless local area network (wireless local area network, WLAN) system, a system integrating a plurality of systems, or a future communication system, for example, a 6G communication system. The 5G communication system may also be referred to as a new radio (new radio, NR) system.

A network element in the communication system may send a signal to another network element or receive a signal from another network element. The signal may include information, signaling, data, or the like. The network element may alternatively be replaced with an entity, a network entity, a device, a terminal device, a communication module, a node, a communication node, or the like. In this disclosure, the network element is used as an example for description. For example, the communication system may include at least one terminal device and at least one network device. The network device may send a downlink signal to the terminal device, and/or the terminal device may send an uplink signal to the network device. In addition, it may be understood that if the communication system includes a plurality of terminal devices, the plurality of terminal devices may also send signals to each other. In other words, both a signal sending network element and a signal receiving network element may be terminal devices.

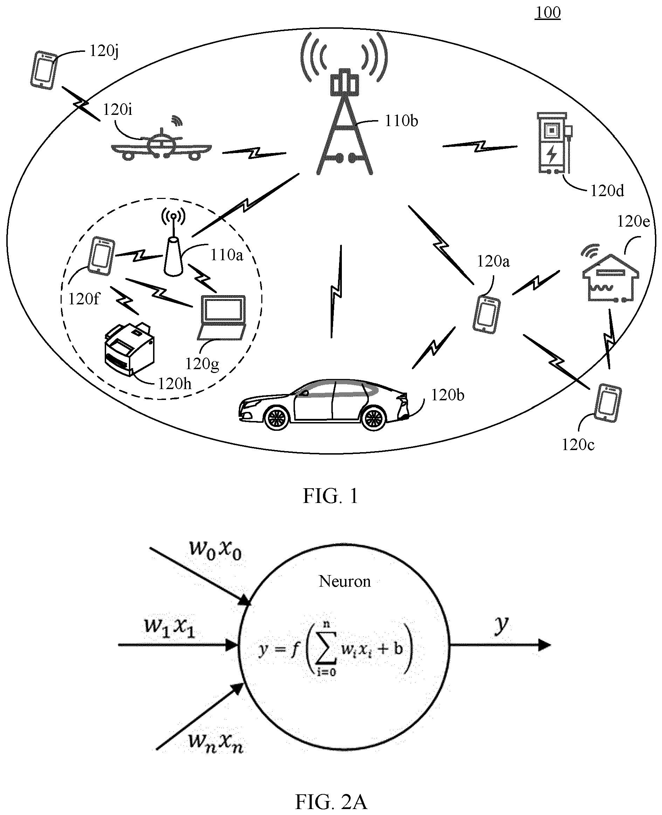

A communication method provided in embodiments of this application may be applied to a wireless communication system like 5G, 6G, or satellite communication. FIG. 1 is a simplified diagram of a wireless communication system according to an embodiment of this application. As shown in FIG. 1, the wireless communication system includes a radio access network 100. The radio access network 100 may be a next generation (for example, 6G or a higher version) radio access network, or a conventional (for example, 5G, 4G, 3G, or 2G) radio access network. One or more terminal devices (120a to 120j, which are collectively referred to as 120) may be interconnected or connected to one or more network devices (110a and 110b, which are collectively referred to as 110) in the radio access network 100. Optionally, FIG. 1 is only a diagram. The wireless communication system may further include another device, for example, may further include a core network device, a wireless relay device, and/or a wireless backhaul device, which are not shown in FIG. 1.

Optionally, in actual application, the wireless communication system may simultaneously include a plurality of network devices (also referred to as access network devices), or may simultaneously include a plurality of terminal devices. One network device may simultaneously serve one or more terminal devices. One terminal device may also simultaneously access one or more network devices. Quantities of terminal devices and network devices included in the wireless communication system are not limited in embodiments of this application.

The network device may be an entity that is configured to transmit or receive a signal on a network side. The network device may be an access device via which the terminal device accesses the wireless communication system in a wireless manner. For example, the network device may be a base station. The base station may cover the following names in a broad sense, or may be replaced with the following names, for example, a NodeB (NodeB), an evolved NodeB (evolved NodeB, eNB), a next generation NodeB (next generation NodeB, gNB), a network device in an open radio access network (open radio access network, O-RAN), a relay station, an access point, a transmission reception point (transmitting and receiving point, TRP), a transmitting point (transmitting point, TP), a master station MeNB, a secondary station SeNB, a multi-standard radio (MSR) node, a home base station, a network controller, an access node, a radio node, an access point (AP), a transmission node, a transceiver node, a baseband unit (BBU), a radio remote unit (RRU), an active antenna unit (AAU), a radio-frequency head (RRH), a central unit (CU), a distributed unit (DU), a radio unit (radio unit, RU), a central unit control plane (CU control plane, CU-CP) node, a central unit user plane (CU user plane, CU-UP) node, and a positioning node. The base station may be a macro base station, a micro base station, a relay node, a donor node, or the like, or a combination thereof. Alternatively, the network device may be a communication module, a modem, or a chip disposed in the foregoing device or apparatus. Alternatively, the network device may be a mobile switching center, a device that takes on a base station function in device-to-device (device-to-device, D2D), vehicle-to-everything (vehicle-to-everything, V2X), and machine-to-machine (machine-to-machine, M2M) communication, a network side device in a 6G network, a device that takes on a base station function in a future communication system, or the like. The network device may support networks using a same access technology or different access technologies. A specific technology and a specific device form used by the network device are not limited in embodiments of this application.

The network device may be fixed or mobile. For example, the base stations 110a and 110b are stationary and are responsible for wireless transmission and reception in one or more cells from the terminal device 120. The helicopter or unmanned aerial vehicle 120i shown in FIG. 1 may be configured to serve as a mobile base station, and one or more cells may move based on a location of the mobile base station 120i. In another example, the helicopter or unmanned aerial vehicle (120i) may be configured to serve as a terminal device communicating with the base station 110b.

In this disclosure, a communication apparatus configured to implement functions of the foregoing access network may be a network device, may be a network device having some functions of the access network, or may be an apparatus that can support implementation of the functions of the access network, for example, a chip system, a hardware circuit, a software module, or a combination of a hardware circuit and a software module. The apparatus may be installed in the network device or used together with the network device. In the method in this disclosure, an example in which the communication apparatus configured to implement the functions of the network device is the network device is used for description.

The terminal device may be an entity, for example, a mobile phone, that is configured to receive or transmit a signal on a user side. The terminal device may be configured to connect to a person, an object, and a machine. The terminal device may communicate with one or more core networks via the network device. The terminal device includes a handheld device having a wireless connection function, another processing device connected to a wireless modem, a vehicle-mounted device, or the like. The terminal device may be a portable, pocket-sized, handheld, computer built-in, or vehicle-mounted mobile apparatus. The terminal device 120 may be widely used in various scenarios, for example, cellular communication, device-to-device D2D, vehicle-to-everything V2X, peer-to-peer P2P, machine-to-machine M2M, machine type communication MTC, internet of things IoT, virtual reality VR, augmented reality AR, industrial control, autonomous driving, remote medical, a smart grid, smart furniture, smart office, a smart wearable, smart transportation, a smart city, an unmanned aerial vehicle, a robot, remote sensing, passive sensing, positioning, navigation and tracking, and autonomous delivery and mobility. Some examples of the terminal device 120 are 3GPP user equipment (UE), a fixed device, a mobile device, a handheld device, a wearable device, a cellular phone, a smartphone, a session initiation protocol (SIP) phone, a notebook computer, a personal computer, a smart book, a vehicle, a satellite, a global positioning system (GPS) device, a target tracking device, an unmanned aerial vehicle, a helicopter, an aircraft, a ship, a remote control device, a smart home device, an industrial device, a personal communication service (personal communication service, PCS) phone, a wireless local loop (wireless local loop, WLL) station, a personal digital assistant (personal digital assistant, PDA), a wireless network camera, a tablet computer, a palmtop computer, a mobile internet device (mobile internet device, MID), a wearable device like a smartwatch, a virtual reality (virtual reality, VR) device, an augmented reality (augmented reality, AR) device, a wireless terminal in industrial control (industrial control), a terminal in an internet of vehicles system, a wireless terminal in self driving (self driving), a wireless terminal in the smart grid (smart grid), a wireless terminal in transportation safety (transportation safety), a wireless terminal like a smart fueler in the smart city (smart city), a terminal device on a high-speed railway, and a wireless terminal like a smart speaker, a smart coffee machine, and a smart printer in a smart home (smart home). The terminal device 120 may be a wireless device in the foregoing various scenarios or an apparatus disposed in a wireless device, for example, a communication module, a modem, or a chip in the foregoing device. The terminal device may also be referred to as a terminal, a terminal device, user equipment (user equipment, UE), a mobile station (mobile station, MS), a mobile terminal (mobile terminal, MT), or the like. The terminal device may alternatively be a terminal device in a future wireless communication system. The terminal device may be used in a dedicated network device, a general-purpose device, or the like. A specific technology and a specific device form used by the terminal device are not limited in embodiments of this application.

Optionally, the terminal device may be configured to serve as a base station. For example, the UE may serve as a scheduling entity that provides sidelink signals between UEs in V2X, D2D, P2P, or the like. As shown in FIG. 1, the cellular phone 120a and the vehicle 120b communicate with each other by using sidelink signals. The cellular phone 120a communicates with the smart home device 120e without relaying a communication signal via the base station 110b.

In this disclosure, a communication apparatus configured to implement functions of the terminal device may be a terminal device, may be a terminal device having some functions of the terminal device, or may be an apparatus that can support implementation of the functions of the terminal device, for example, a chip system. The apparatus may be installed in the terminal device or used together with the terminal device. In this disclosure, the chip system may include a chip, or may include a chip and another discrete component. In the technical solutions provided in this disclosure, an example in which the communication apparatus is the terminal device or the UE is used for description.

Optionally, the wireless communication system usually includes a cell, the base station provides cell management, and the base station provides a communication service for a plurality of mobile stations (mobile stations, MSs) in the cell. The base station includes a baseband unit (baseband unit, BBU) and a remote radio unit (remote radio unit, RRU). The BBU and the RRU may be deployed at different places. For example, the RRU is remotely deployed in a high-traffic area, and the BBU is deployed in a central equipment room. Alternatively, the BBU and the RRU may be deployed in a same equipment room. Alternatively, the BBU and the RRU may be different components at a same rack. Optionally, one cell may correspond to one carrier or component carrier.

It may be understood that this disclosure may be applied between a network device and a terminal device, between network devices, or between terminal devices, that is, between a primary device and a secondary device. The primary device may be a network device or a terminal device. When the primary device is a network device, the secondary device may be another network device or a terminal device. When the primary device is a terminal device, the secondary device may be another terminal device.

The following describes the solution by using an example in which the primary device is the network device and the secondary device is the terminal device. A communication direction corresponding to downlink is sending from the primary device to the secondary device, and a communication direction corresponding to uplink is sending from the secondary device to the primary device.

Protocol layer structure between the network device and the terminal device

Communication between the network device and the terminal device complies with a specified protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, and a physical layer. For example, the user plane protocol layer structure may include functions of protocol layers such as the PDCP layer, the RLC layer, the MAC layer, and the physical layer. In a possible implementation, there may be further a service data adaptation protocol (service data adaptation protocol, SDAP) layer above the PDCP layer.

Optionally, the protocol layer structure between the network device and the terminal may further include an artificial intelligence (artificial intelligence, AI) layer, used to transmit data related to an AI function.

Data transmission between the network device and the terminal device is used as an example. Data transmission needs to pass through the user plane protocol layer, for example, the SDAP layer, the PDCP layer, the RLC layer, the MAC layer, and the physical layer. The SDAP layer, the PDCP layer, the RLC layer, the MAC layer, and the physical layer may also be collectively referred to as an access stratum. Because a data transmission direction includes sending or receiving, each layer is further divided into a sending part and a receiving part. Downlink data transmission is used as an example. After obtaining data from an upper layer, the PDCP layer transmits the data to the RLC layer and the MAC layer. The MAC layer generates a transport block, and then wireless transmission is performed through the physical layer. Data is correspondingly encapsulated at each layer. For example, data received by a layer from an upper layer of the layer is considered as a service data unit (service data unit, SDU) of the layer, encapsulated by the layer into a protocol data unit (protocol data unit, PDU), and then transferred to a next layer.

For example, the terminal device may further have an application layer and a non-access stratum. The application layer may be used to provide a service for an application installed in the terminal device. For example, downlink data received by the terminal device may be sequentially transmitted from the physical layer to the application layer, and then is provided by the application layer for the application. For another example, the application layer may obtain data generated by the application, sequentially transmit the data to the physical layer, and send the data to another communication apparatus. The non-access stratum may be used to forward user data. For example, the non-access stratum forwards uplink data received from the application layer to the SDAP layer, or forwards downlink data received from the SDAP layer to the application layer.

Structure of the network device

The network device may include a central unit (central unit, CU) and a distributed unit (distributed unit, DU). A plurality of DUs may be controlled by one CU in a centralized manner. For example, an interface between the CU and the DU may be referred to as an F1 interface. A control plane (control plane, CP) interface may be F1-C, and a user plane (user plane, UP) interface may be F1-U. The CU and the DU may be divided based on a protocol layer of a wireless network. For example, functions of a PDCP layer and a protocol layer above the PDCP layer are set on the CU, and functions of a protocol layer (for example, an RLC layer and a MAC layer) below the PDCP layer are set on the DU. For another example, functions of a protocol layer above a PDCP layer are set on the CU, and functions of the PDCP layer and a protocol layer below the PDCP layer are set on the DU.

It may be understood that division into processing functions of the CU and the DU based on the protocol layers is merely an example, and there may be another division manner. For example, the CU or the DU may be divided into functions having more protocol layers. For another example, the CU or the DU may be further divided into some processing functions having protocol layers. In a design, some functions of an RLC layer and functions of a protocol layer above the RLC layer are set on the CU, and remaining functions of the RLC layer and functions of a protocol layer below the RLC layer are set on the DU. In another design, division into functions of the CU or the DU may alternatively be performed based on service types or other system requirements. For example, division may be performed based on latencies. Functions whose processing time needs to meet a latency requirement are set on the DU, and functions whose processing time does not need to meet the latency requirement are set on the CU. In another design, the CU may alternatively have one or more functions of the core network. For example, the CU may be disposed on the network side to facilitate centralized management. In another design, an RU of the DU is disposed remotely. The RU has a radio frequency function.

Optionally, the DU and the RU may be distinguished at a physical layer (physical layer, PHY). For example, the DU may implement higher-layer functions of the PHY layer, and the RU may implement lower-layer functions of the PHY layer. When used for sending, a function of the PHY layer may include cyclic redundancy check (cyclic redundancy check, CRC) code addition, channel encoding, rate matching, scrambling, modulation, layer mapping, precoding, resource mapping, physical antenna mapping, and/or radio frequency sending functions. When used for receiving, a function of the PHY layer may include CRC, channel decoding, rate de-matching, descrambling, demodulation, layer de-mapping, channel detection, resource de-mapping, physical antenna de-mapping, and/or radio frequency receiving functions. The higher-layer function of the PHY layer may include some functions of the PHY layer. For example, the functions are closer to the MAC layer. The lower-layer function of the PHY layer may include some other functions of the PHY layer. For example, the functions are closer to the radio frequency function. For example, the higher-layer function of the PHY layer may include CRC code addition, channel encoding, rate matching, scrambling, modulation, and layer mapping, and the lower-layer function of the PHY layer may include precoding, resource mapping, physical antenna mapping, and radio frequency sending functions. Alternatively, the higher-layer function of the PHY layer may include CRC code addition, channel encoding, rate matching, scrambling, modulation, layer mapping, and precoding, and the lower-layer function of the PHY layer may include resource mapping, physical antenna mapping, and radio frequency sending functions.

For example, a function of the CU may be implemented by one entity, or may be implemented by different entities. For example, the function of the CU may be further divided. To be specific, a control plane and a user plane are separated and implemented by different entities, which are a control plane CU entity (namely, a CU-CP entity) and a user plane CU entity (namely, a CU-UP entity). The CU-CP entity and the CU-UP entity may be coupled to the DU, to jointly complete functions of the network device.

In the foregoing architecture, signaling generated by the CU may be sent to a terminal device via the DU, or signaling generated by a terminal device may be sent to the CU via the DU. For example, signaling at an RRC layer or the PDCP layer is finally processed into signaling at the physical layer and sent to the terminal device, or is converted from signaling received from the physical layer. In this architecture, signaling at the RRC layer or the PDCP layer may be considered as being sent via the DU or being sent via the DU and the RU.

Optionally, any one of the DU, the CU, the CU-CP, the CU-UP, and the RU may be a software module, a hardware structure, or a combination of the software module and the hardware structure. This is not limited. Different entities may exist in different forms. This is not limited. For example, the DU, the CU, the CU-CP, and the CU-UP are software modules, and the RU is a hardware structure. The modules and methods performed by the modules also fall within the protection scope of this disclosure.

It should be understood that a quantity and a type of each device in the communication system shown in FIG. 1 are merely used as an example, and this disclosure is not limited thereto. In actual application, the communication system may further include more terminal devices and more network devices, and may further include another network element, for example, may include a core network device and/or a network element configured to implement an artificial intelligence function.

The method provided in this disclosure may be used for communication between the network device and the terminal device, and may also be used for communication between other terminal devices, for example, communication between a macro base station and a micro base station in a wireless backhaul link, or communication between two terminal devices in a sidelink (sidelink, SL). This is not limited.

The following describes a CSI feedback technology in this disclosure. With development of wireless communication technologies, services supported by a communication system continuously increase, and higher requirements are imposed on the communication system in terms of indicators such as a system capacity and a communication latency. In the foregoing communication system (for example, the LTE or NR system), extending a bandwidth that can be used by the terminal device can effectively improve a communication rate. To enable the terminal device to use a wider available bandwidth, the network device may allocate a plurality of contiguous or non-contiguous frequency bands to the terminal device for communication. To support effective communication on each frequency band, the network device needs to obtain channel state information CSI of each frequency band. For example, for a frequency band used for downlink communication or downlink transmission, the network device may determine, based on CSI of the frequency band, configurations such as a resource, a modulation and coding scheme (modulation and coding scheme, MCS), and precoding of a scheduled downlink data channel of the terminal device. For another example, for a frequency band used for uplink communication or uplink transmission, the network device may determine, based on CSI of the frequency band, configurations such as a resource and precoding of an uplink data channel of the terminal device. It may be understood that the CSI is channel information, and is information that can reflect a channel characteristic and channel quality. The channel information may also be referred to as a channel response. For example, the CSI may be indicated by using a channel matrix. For example, the CSI includes the channel matrix, or the CSI may include an eigenvector of the channel.

In a frequency division duplex (frequency division duplex, FDD) communication scenario, because uplink and downlink channels do not have reciprocity, in other words, the reciprocity between the uplink and downlink channels cannot be ensured. In downlink communication, the network device usually sends a downlink reference signal to the terminal device. The terminal device performs channel measurement and interference measurement based on the received downlink reference signal to estimate downlink channel information, where the downlink channel information includes downlink CSI. The terminal device may feed back the downlink CSI to the network device. In uplink communication, the terminal device usually sends an uplink reference signal to the network device. The network device performs channel measurement and interference measurement based on the received uplink reference signal to estimate uplink channel information, where the uplink channel information includes uplink CSI.

Downlink CSI feedback is used as an example. In a conventional downlink CSI feedback manner, the terminal device may generate a downlink CSI report based on estimated downlink CSI in a predefined manner or a manner configured by the network device. The terminal device may feed back the downlink CSI report to the network device. The downlink reference signal includes a channel state information-reference signal (channel state information-reference signal, CSI-RS) or a synchronization signal block (synchronization signal/physical broadcast channel block, SSB). The CSI report includes a feedback quantity, for example, a rank indicator (rank indicator, RI), a channel quality indicator (channel quality indicator, CQI), and a precoding matrix indicator (precoding matrix indicator, PMI). The RI indicates a quantity of downlink transport layers recommended by the terminal device, the CQI indicates a modulation and coding scheme that can be supported by a current channel condition determined by the terminal device, and the PMI indicates precoding recommended by the terminal device.

As a scale of an antenna array in the system increases, a quantity of antenna ports that can be supported by the communication system increases, and a size of a complete channel matrix is in direct proportion to the quantity of antenna ports. In a massive MIMO system, the terminal device uses the conventional CSI feedback manner, and feeding back the complete channel matrix to the network device based on the CSI causes huge feedback overheads. When the terminal device performs communication on a plurality of frequency bands, the feedback overheads further increase. The huge feedback overheads reduce available resources for data transmission and reduce the system capacity. Therefore, to improve the system capacity, how to reduce the CSI feedback overheads becomes a problem worth studying.

Artificial intelligence (artificial intelligence, AI) is introduced into a wireless communication network, and an AI-based downlink CSI feedback manner is formed. The terminal device compresses and feeds back downlink CSI by using an AI model, and the network device restores the compressed downlink CSI by using the AI model. In the AI-based downlink CSI feedback, a sequence (for example, a bit sequence) is transmitted between the terminal device and the access network device. Overheads of CSI feedback in this manner are lower than overheads of conventional downlink CSI report feedback.

Currently, when the terminal device feeds back downlink CSI of a plurality of frequency bands, the terminal device usually separately compresses and feeds back the downlink CSI of each frequency band based on the AI, so that the network device separately restores the compressed downlink CSI of the plurality of frequency bands. Correspondingly, to support compression of and feedback on the downlink CSI of each frequency band, the network device needs to send sufficient downlink reference signals on each frequency band for channel estimation of the terminal device. In this way, a design of independent compression of and feedback on the downlink CSI of the plurality of frequency bands causes repeated transmission of some same information between the downlink CSI of the plurality of frequency bands, and results in a waste of resources.

In view of this, this disclosure provides a communication method, to consider channel correlation between a plurality of frequency bands in compression of and feedback on CSI of the plurality of frequency bands based on AI. In this disclosure, some frequency bands are selected, as primary frequency bands, from a plurality of frequency bands having channel correlation, and the other frequency bands are used as secondary frequency bands. Channel information of the primary frequency band may be used for channel estimation or restoration of the secondary frequency band. For example, the terminal device performs independent compression and feedback on downlink CSI of the primary frequency band, and the terminal device feeds back only downlink CSI corresponding to a part that is of the secondary frequency band and that is different from the primary frequency band. In this manner, a waste of resources caused by repeated transmission of same information between the plurality of frequency bands can be reduced, thereby reducing downlink CSI feedback overheads. The communication method may be applied to the foregoing communication system, for example, the FDD communication scenario. In addition, optionally, the communication method may be further applied to a time division duplex (time division duplex, TDD) communication scenario. This is not limited in this disclosure.

In this disclosure, that there is the channel correlation between the plurality of frequency bands may alternatively be described as that channel information of the plurality of frequency bands are correlated. In specific implementation, the correlation may be indicated by an overlapping part between channel characteristics of the plurality of frequency bands, where the overlapping part may alternatively be described as a same part. Alternatively, the correlation may be described as follows: The correlation indicates that a same channel characteristic exists between the primary frequency band and the secondary frequency band in the plurality of frequency bands.

Optionally, both the primary frequency band and the secondary frequency band in this disclosure may be used for downlink communication or uplink communication, or the primary frequency band and the secondary frequency band in this disclosure correspond to different transmission directions. For example, the primary frequency band is used for downlink communication, and the secondary frequency band is used for uplink communication. For another example, the primary frequency band is used for uplink communication, and the secondary frequency band is used for downlink communication. It may be understood that in this disclosure, there may be channel correlation between frequency bands in a same transmission direction, and there may also be channel correlation between frequency bands in different transmission directions. This is not limited in this disclosure.

For ease of understanding, the following first describes an AI technology in this disclosure. It may be understood that the description is not intended to limit this disclosure.

(1) AI model

The AI model is a specific implementation of an AI technology function. The AI model indicates a mapping relationship between an input and an output of the model. A type of the AI model may be a neural network, a linear regression model, a decision tree model, a support vector machine (support vector machine, SVM), a Bayesian network, a Q-learning model, or another machine learning (machine learning, ML) model.

This disclosure relates to an encoder configured to compress CSI and a decoder configured to restore the compressed CSI. The encoder and the decoder need to be used together. It may be understood that the encoder and the decoder are matching AI models.

In a possible design, a set of encoder (encoder) and decoder (decoder) that are used together may be specifically two parts of a same auto-encoder (auto-encoder, AE). The auto-encoder is an unsupervised learning neural network, and is characterized by using input data as label data. Therefore, the auto-encoder may also be understood as a self-supervised learning neural network. The auto-encoder may be configured to compress and restore data. For example, the encoder in the auto-encoder may compress (encode) data A to obtain data B, and the decoder in the auto-encoder may decompress (decode) the data B to restore the data A. In addition, it may also be understood that the decoder is an inverse operation of the encoder.

(2) Neural network

The neural network is a specific implementation form of an AI or machine learning technology. According to a universal approximation theorem, the neural network can theoretically approximate any continuous function, so that the neural network has a capability of learning any mapping.

An idea of the neural network is from a neuron structure of brain tissue. For example, each neuron performs a weighted summation operation on input values of the neuron, and outputs an operation result through an activation function. FIG. 2A is a diagram of a neuron structure. It is assumed that inputs of the neuron are $x = [x_0, x_1, ..., x_n]$, and weights corresponding to the inputs are respectively $w = [w, w_1, ..., w_n]$, where $w_i$ is used as a weight of $x_i$ and is used to weight $x_i$. An offset for performing weighted summation on the input values based on the weights is, for example, b. There may be a plurality of forms of the activation function. It is assumed that an activation function of a neuron is $y = f(z) = \max(0, z)$, and an output of the neuron is $y = f\left(\sum_{i=0}^{i=n} w_i * x_i + b\right) = \max\left(0, \sum_{i=0}^{i=n} w_i * x_i + b\right)$. For another example, if an activation function of a neuron is $y = f(z) = z$, an output of the neuron is $y = f\left(\sum_{i=0}^{i=n} w_i * x_i + b\right) = \sum_{i=0}^{i=n} w_i * x_i + b$. $b$, $w_i$, and $x_i$ may be various possible values such as a decimal, an integer (for example, 0, a positive integer, or a negative integer), or a complex number. Activation functions of different neurons in the neural network may be the same or different.

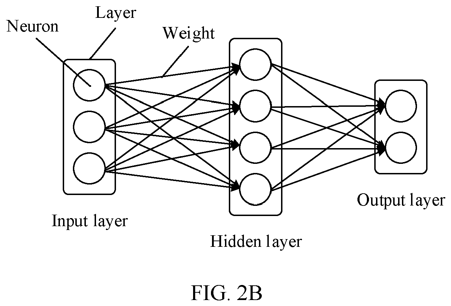

The neural network usually includes a plurality of layers, and each layer may include one or more neurons. A depth and/or a width of the neural network are/is increased, so that an expression capability of the neural network can be improved, and a more powerful information extraction and abstraction modeling capability can be provided for a complex system. The depth of the neural network may be a quantity of layers included in the neural network, and a quantity of neurons included in each layer may be referred to as a width of the layer. In an implementation, the neural network includes an input layer and an output layer. The input layer of the neural network performs neuron processing on received input information, and transfers a processing result to the output layer. The output layer obtains an output result of the neural network. In another implementation, the neural network includes an input layer, a hidden layer, and an output layer. Refer to FIG. 2B. The input layer of the neural network performs neuron processing on received input information, and transfers a processing result to the intermediate hidden layer. The hidden layer performs calculation on the received processing result to obtain a calculation result. The hidden layer transfers the calculation result to the output layer or an adjacent hidden layer. Finally, the output layer obtains an output result of the neural network. One neural network may include one hidden layer, or include a plurality of hidden layers that are sequentially connected. This is not limited.

For example, the type of the AI model is the neural network. The AI model in this disclosure may be a deep neural network (deep neural network, DNN). According to a network construction manner, the DNN may include a feedforward neural network (feedforward neural network, FNN), a convolutional neural network (convolutional neural network, CNN), and a recurrent neural network (recurrent neural network, RNN).

(3) Training dataset and inference data

The training dataset is used for training an AI model. The training dataset may include an input of the AI model, or include an input and a target output of the AI model. The training dataset includes one or more pieces of training data. The training data may be a training sample input to the AI model, or may be the target output of the AI model. The target output may also be referred to as a label or a label sample. The training dataset is one of important parts of machine learning. In essence, model training is to learn some features from the training data, so that an output of the AI model is as close as possible to the target output, for example, a difference between the output of the AI model and the target output is minimized. Composition and selection of the training dataset can determine performance of a trained AI model to some extent.

In addition, a loss function may be defined in a training process of the AI model (for example, a neural network). The loss function describes a gap or difference between an output value of the AI model and a target output value. A specific form of the loss function is not limited in this disclosure. The training process of the AI model is a process in which a model parameter of the AI model is adjusted, so that a value of the loss function is less than a threshold, or a value of the loss function meets a target requirement. For example, the AI model is a neural network, and adjusting a model parameter of the neural network includes adjusting at least one of the following parameters: a quantity of layers and a width of the neural network, a weight of a neuron, or a parameter in an activation function of a neuron.

The inference data may be used as an input of a trained AI model for AI model inference. During model inference, the inference data is input to an AI model, to obtain a corresponding output, namely, an inference result.

(4) AI model design

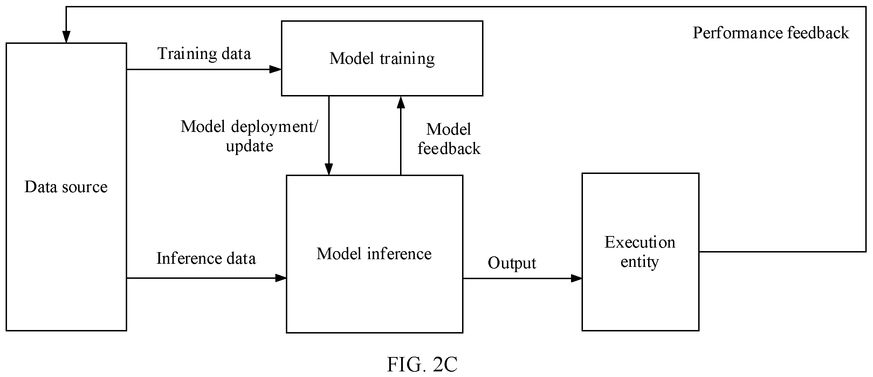

The AI model design mainly includes a data collection phase (for example, collection of training data and/or inference data), a model training phase, and a model inference phase. Further, an inference result application phase may be included. FIG. 2C shows an AI application framework. In the foregoing data collection phase, a data source (data source) is used to provide the training dataset and the inference data. In the model training phase, the training data (training data) provided by the data source is analyzed or trained to obtain an AI model. The AI model indicates a mapping relationship between an input and an output of the model. Obtaining the AI model through learning by using a model training node is equivalent to obtaining the mapping relationship between the input and the output of the model through learning based on the training data. In the model inference phase, the AI model obtained through training in the model training phase is used to perform inference based on the inference data provided by the data source, to obtain an inference result. This phase may also be understood as follows: The inference data is input to the AI model, to obtain the output through the AI model. The output is the inference result. The inference result may indicate a configuration parameter used (acted) by an execution object, and/or an operation performed by the execution object. The inference result is released in the inference result application phase. For example, the inference result may be planned by an execution (actor) entity in a unified manner. For example, the execution entity may send the inference result to one or more execution objects (for example, a core network device, a network device, or a terminal device) for execution. For another example, the execution entity may further feed back performance of the model to the data source, to facilitate subsequent model update training.

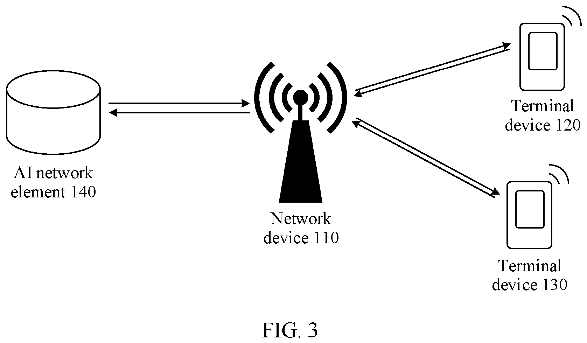

It may be understood that the communication system may include a network element having an artificial intelligence function. The foregoing phases related to the AI model design may be performed by one or more network elements having the artificial intelligence function. In a possible design, the AI function may be configured in an existing network element (for example, an AI module or an AI entity) in the communication system, to implement an AI-related operation, for example, AI model training and/or inference. For example, the existing network element may be a network device (for example, a gNB), a terminal device, a core network device, a network management system, or the like. The network management system may classify network management work into three types based on an actual requirement of network operation of an operator: operation (Operation), administration (Administration), and maintenance (Maintenance). The network management system may also be referred to as an operation administration and maintenance (operation administration and maintenance, OAM) network element, OAM for short. The operation mainly refers to routine analysis, prediction, planning, and configuration for networks and services. The maintenance mainly refers to routine operation activities such as network and service tests and fault management. The network management system can detect a network running status, optimize network connections and performance, improve network running stability, and reduce network maintenance costs. In another possible design, an independent network element may alternatively be introduced into the communication system to perform an AI-related operation, for example, AI model training. The independent network element may be referred to as an AI network element, an AI node, or the like. The name is not limited in this disclosure. The AI network element may be directly connected to the network device in the communication system, or may be indirectly connected to the network device via a third-party network element. The third-party network element may be a core network element like an authentication management function (authentication management function, AMF) network element or a user plane function (user plane function, UPF) network element, OAM, a cloud server, or another network element. This is not limited. For example, FIG. 3 shows a communication system. The communication system includes a network device 110, a terminal device 120, and a terminal device 130. In addition, an AI network element 140 is further introduced into the communication system shown in FIG. 3.

In this disclosure, one parameter or a plurality of parameters may be obtained through inference by using one model. Training processes of different models may be deployed on different devices or nodes, or may be deployed on a same device or node. Inference processes of different models may be deployed on different devices or nodes, or may be deployed on a same device or node. For example, the terminal device completes the model training phase, and after training an encoder and a decoder that can be trained together, the terminal device may send a model parameter of the decoder to the network device. For example, the network device completes the model training phase, and after training an encoder and a decoder that can be trained together, the network device may indicate a model parameter of the encoder to the terminal device. For example, an independent AI network element completes the model training phase, and after training an encoder and a decoder that can be trained together, the AI network element may send a model parameter of the encoder to the terminal device, and send a model parameter of the decoder to the network device. A model inference phase corresponding to the encoder is performed in the terminal device, and a model inference phase corresponding to the decoder is performed in the network device.

The model parameter may include one or more of the following: a structure parameter of the model (for example, a quantity of layers and/or a weight of the model), an input parameter of the model (for example, an input dimension and a quantity of input ports), and an output parameter of the model (for example, an output dimension and a quantity of output ports). It may be understood that the input dimension may be a size of one piece of input data. For example, when the input data is a sequence, an input dimension corresponding to the sequence may indicate a length of the sequence. The quantity of input ports may be a quantity of pieces of input data. Similarly, the output dimension may be a size of one piece of output data. For example, when the output data is a sequence, an output dimension corresponding to the sequence may indicate a length of the sequence. The quantity of output ports may be a quantity of pieces of output data.

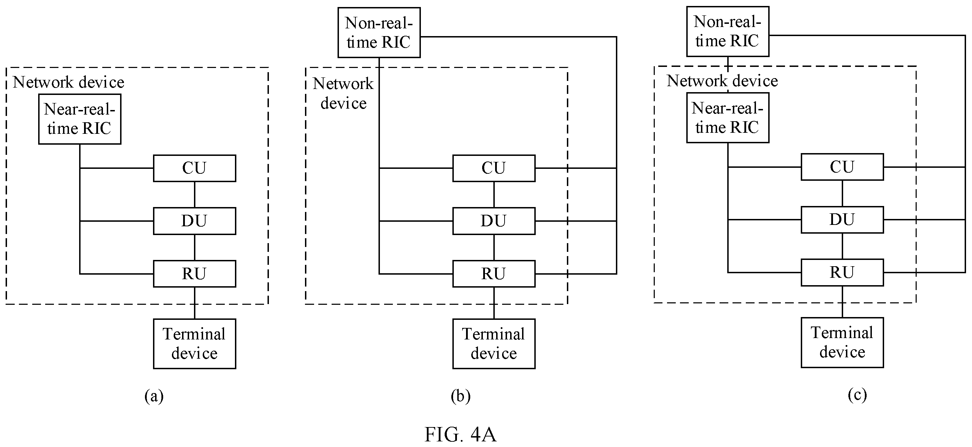

Further, this disclosure further provides several network architectures shown in FIG. 4A to FIG. 4D. For example, model training and/or inference are/is performed in a network device, and division is performed in the network device to obtain functional modules for the model training and/or inference.

As shown in (a) in FIG. 4A, in a first possible implementation, the network device includes a near-real-time radio access network intelligent controller (RAN intelligent controller, RIC) module, configured to perform model learning and/or inference. For example, the near-real-time RIC may obtain information on a network side and/or a terminal side from at least one of a CU, a DU, or an RU, where the information may include training data or inference data. For example, the near-real-time RIC may be configured to perform model training, and may further perform inference by using a trained model. In addition, optionally, the near-real-time RIC may submit an inference result to at least one of the CU, the DU, and the RU. Optionally, the CU and the DU may exchange the inference result. Optionally, the DU and the RU may exchange the inference result. For example, the near-real-time RIC submits the inference result to the DU, and the DU submits the inference result to the RU.

As shown in (b) in FIG. 4A, in a second possible implementation, in a communication system, a non-real-time RIC may be included outside the network device. Optionally, the non-real-time RIC may be located in OAM or a core network device. The non-real-time RIC is configured to perform model learning and inference. For example, the non-real-time RIC may obtain information on a network side and/or a terminal side from at least one of a CU, a DU, and an RU, where the information may include training data or inference data. For example, the non-real-time RIC is configured to perform model training, and may further perform inference by using a trained model. In addition, optionally, the non-real-time RIC may submit an inference result to at least one of the CU, the DU, and the RU. Optionally, the CU and the DU may exchange the inference result. Optionally, the DU and the RU may exchange the inference result. For example, the non-real-time RIC submits the inference result to the DU, and the DU submits the inference result to the RU.

As shown in (c) in FIG. 4A, in a third possible implementation, the network device includes a near-real-time RIC, and a non-real-time RIC is further included outside the network device. Optionally, the non-real-time RIC may be located in OAM or a core network device. In a first possible design, the non-real-time RIC may be configured to perform model training. The near-real-time RIC may obtain a model parameter of a trained AI model from the non-real-time RIC, obtain information on a network side and/or a terminal side from at least one of a CU, a DU, and an RU, and obtain an inference result based on the information and by using the trained AI model. The near-real-time RIC may further submit the inference result to at least one of the CU, the DU, and the RU. Optionally, the CU and the DU may exchange the inference result, and the DU and the RU may exchange the inference result. For example, the near-real-time RIC submits the inference result to the DU, and the DU may submit the inference result to the RU. In a second possible design, the near-real-time RIC is configured to perform model training and perform inference by using a trained model, and the non-real-time RIC does not participate in model training or inference. Alternatively, the non-real-time RIC is configured to perform model training and perform inference by using a trained model, and the near-real-time RIC does not participate in model training or inference. In a third possible design, the near-real-time RIC is configured to perform model training and send a model parameter of a trained AI model to the non-real-time RIC, and the non-real-time RIC performs inference by using the trained model.

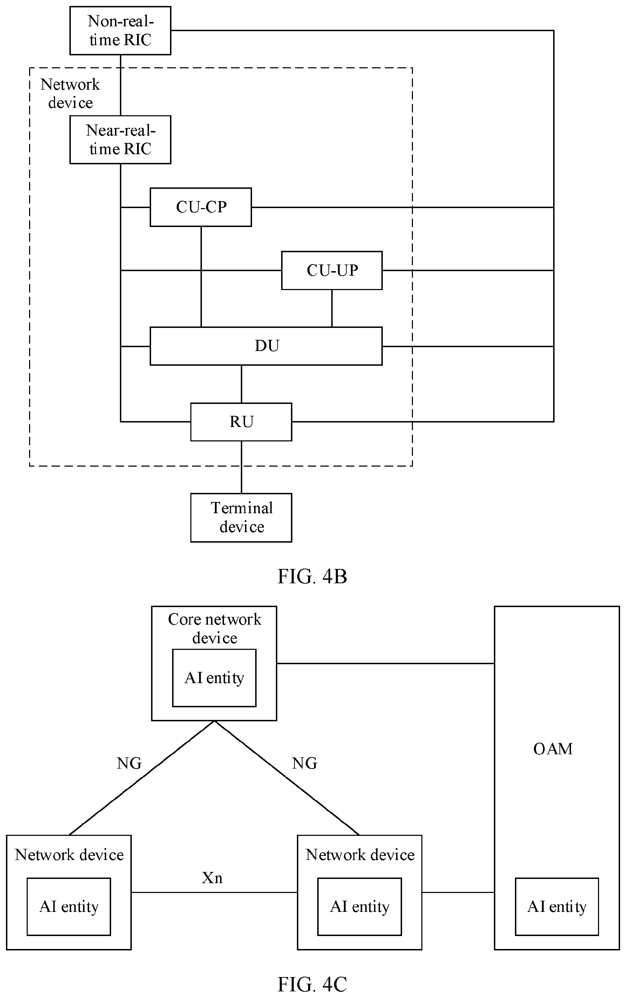

FIG. 4B is an example diagram of a network architecture to which a method provided in this disclosure can be applied. Compared with (c) in FIG. 4A, in FIG. 4B, a CU is separated into a CU-CP and a CU-UP.

FIG. 4C is an example diagram of a network architecture to which a method provided in this disclosure can be applied. As shown in FIG. 4C, optionally, the network device includes one or more AI entities, and a function of the AI entity is similar to that of the near-real-time RIC. Optionally, OAM includes one or more AI entities, and a function of the AI entity is similar to that of the non-real-time RIC. Optionally, a core network device includes one or more AI entities, and a function of the AI entity is similar to that of the non-real-time RIC. When the OAM and the core network device each include an AI entity, models obtained through training by the AI entities of the OAM and the core network device are different, and/or models for inference are different. In this disclosure, that the models are different includes at least one of the following: structure parameters of the models (for example, quantities of layers and/or weights of the models) are different, input parameters of the models are different, or output parameters of the models are different.

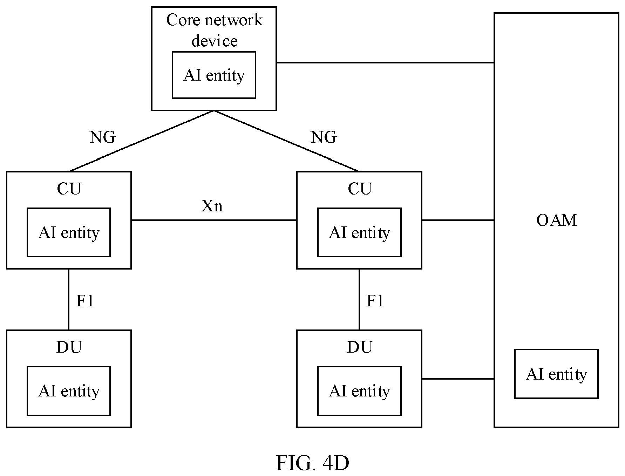

FIG. 4D is an example diagram of a network architecture to which a method provided in this disclosure can be applied. Compared with FIG. 4C, the network device in FIG. 4D is separated into a CU and a DU. Optionally, the CU may include an AI entity, and a function of the AI entity is similar to that of the near-real-time RIC. Optionally, the DU may include an AI entity, and a function of the AI entity is similar to that of the near-real-time RIC. When the CU and the DU each include an AI entity, models obtained through training by the AI entities of the CU and the DU are different, and/or models for inference are different. Optionally, the CU in FIG. 4D may be further split into a CU-CP and a CU-UP. Optionally, one or more AI models may be deployed in the CU-CP, and/or one or more AI models may be deployed in the CU-UP. Optionally, in FIG. 4C or FIG. 4D, the OAM of the network device and OAM of a core network device may be separately and independently deployed.

Further, the following describes in detail the communication method provided in this disclosure by using Solution 1 to Solution 3.

Solution 1

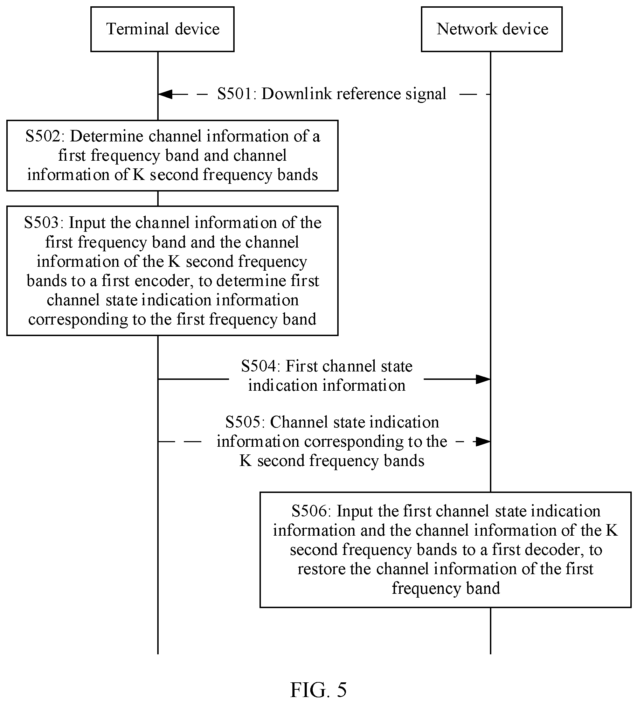

FIG. 5 shows a communication method. The method includes the following procedure.

S501: A network device sends a downlink reference signal to a terminal device.

In specific implementation, the network device may separately send downlink reference signals to the terminal device on a plurality of frequency bands. The downlink reference signal is used by the terminal device to estimate channel information of a corresponding frequency band. Correspondingly, the terminal device may receive the downlink reference signals from the network device on the plurality of frequency bands.

S502: The terminal device determines channel information of a first frequency band and channel information of K second frequency bands.

In specific implementation, corresponding to S501, the terminal device may obtain the channel information of the first frequency band through estimation based on the downlink reference signal received on the first frequency band. The channel information may also be described as downlink channel information. The channel information of the first frequency band indicates all channel characteristics of the first frequency band that are estimated based on the downlink reference signal, and the channel information of the first frequency band includes downlink CSI corresponding to the first frequency band.

The first frequency band may be a secondary frequency band, and a primary frequency band corresponding to the secondary frequency band includes the K second frequency bands. Channel correlation exists between the K second frequency bands and the first frequency band, that is, the channel information of the K second frequency bands is correlated with the channel information of the first frequency band, where K is a positive integer. In addition, the channel information reflects a channel characteristic, and the channel correlation existing between the K second frequency bands and the first frequency band may also be understood or described as that an overlapping part exists between all channel characteristics of the K second frequency bands and all channel characteristics of the first frequency band.

The following describes in detail a manner in which the terminal device determines the K second frequency bands.

In an optional implementation, the K second frequency bands that have the channel correlation with the first frequency band are preconfigured. The terminal device may determine the K second frequency bands based on the configuration.

In another optional implementation, the network device may indicate, to the terminal device, the K second frequency bands that have the channel correlation with the first frequency band, and the terminal device determines the K second frequency bands based on the indication of the network device.

In specific implementation, the network device may send first information to the terminal device, where the first information may indicate an association relationship between the plurality of frequency bands. The association relationship between the plurality of frequency bands may include one or more of the following: Channel information of any frequency band in the plurality of frequency bands may be used to determine channel state indication information corresponding to at least one frequency band in the plurality of frequency bands; channel state indication information corresponding to the any frequency band may be used to restore channel information of the at least one frequency band in the plurality of frequency bands; and frequency bands having channel correlation exist in the plurality of frequency bands. The channel state indication information corresponds to the channel information, and is compressed information obtained after the channel information is compressed, or quantized information obtained after the channel information is compressed and quantized. In a scenario in which the channel information includes the downlink CSI, the channel state indication information may be compressed downlink CSI or compressed and quantized downlink CSI.

The plurality of frequency bands include the first frequency band and the K second frequency bands. Correspondingly, from a perspective of the first frequency band, the first information may also indicate one or more of the following, or the terminal device may determine one or more of the following based on the first information: The channel information of the K second frequency bands is capable of being used to determine first channel state indication information; the channel information of the K second frequency bands is correlated with the channel information of the first frequency band; and channel state indication information corresponding to the K second frequency bands or the channel information of the K second frequency bands is capable of being used to restore the channel information of the first frequency band.

Optionally, the network device may further indicate a specified condition of the primary frequency band to the terminal device. For example, channel state indication information corresponding to one frequency band in the plurality of frequency bands is capable of being used to restore channel information of another frequency band, but channel information of the frequency band can be restored only based on the channel state indication information corresponding to the frequency band. In this case, the frequency band may be set as one primary frequency band. For another example, when channel state indication information corresponding to one frequency band in the plurality of frequency bands is capable of being used to restore channel information of another frequency band, and load on the frequency band is less than a set load threshold or less than load of the another frequency band, the frequency band may be set as one primary frequency band. Based on this, the terminal device may further determine, based on the specified condition of the primary frequency band, the primary frequency band corresponding to the first frequency band, namely, the K second frequency bands.

The following describes in detail content included in the first information by using M to indicate a quantity of frequency bands.

In an implementation, the first information may include attribute information of an $i^{th}$ frequency band in the M frequency bands, where M is an integer greater than 1, and i is a part of or all of integers from 1 to M. The attribute information of the $i^{th}$ frequency band may indicate that information of the $i^{th}$ frequency band is available for a plurality of frequency bands. The information of the $i^{th}$ frequency band may be channel information, and that the information of the $i^{th}$ frequency band is available for a plurality of frequency bands means that the channel information of the $i^{th}$ frequency band may be used to determine channel state indication information corresponding to the plurality of frequency bands in the M frequency bands. Alternatively, the information of the $i^{th}$ frequency band may be channel state indication information, and that the information of the $i^{th}$ frequency band is available for a plurality of frequency bands means that the channel state indication information corresponding to the $i^{th}$ frequency band may be used to restore channel information of the plurality of frequency bands in the M frequency bands. Alternatively, that the information of the $i^{th}$ frequency band is available for a plurality of frequency bands means that the channel information of the $i^{th}$ frequency band is correlated with the plurality of frequency bands in the M frequency bands.

In addition, it may be understood that, when i is a part of the integers from 1 to M, it may be set that information of frequency bands other than the $i^{th}$ frequency band in the M frequency bands is not available for a plurality of frequency bands, that is, the information of the other frequency bands is used only for the frequency bands, or is available for the single frequency band. The first information does not need to include attribute information of the other frequency bands.

In specific implementation, the attribute information of the $i^{th}$ frequency band may include an identifier of the $i^{th}$ frequency band and an available frequency band list corresponding to the $i^{th}$ frequency band, where the available frequency band list indicates that the information of the $i^{th}$ frequency band is available for $N_i$ frequency bands. For example, the channel information of the $i^{th}$ frequency band may be used to determine channel state indication information of the $N_i$ frequency bands, the channel state indication information of the $i^{th}$ frequency band may be used to restore channel information of the $N_i$ frequency bands, and the channel information of the $i^{th}$ frequency band is correlated with the channel information of the $N_i$ frequency bands, where $1 < N_i \leq M$, and $N_i$ is an integer. Optionally, different values of i correspond to different $N_i$ frequency bands.

In an example, the available frequency band list corresponding to the $i^{th}$ frequency band may be a binary vector whose length is M, that is, the binary vector includes M elements, and the M elements one-to-one correspond to the M frequency bands. When one element in the M elements is set to a first value, it indicates that the information of the $i^{th}$ frequency band is available for a frequency band corresponding to the element. When one element in the M elements is set to a second value, it indicates that the information of the $i^{th}$ frequency band is not available for a frequency band corresponding to the element. Optionally, in this example, one element may be replaced with or understood as 1 bit. Optionally, the first value is 0, and the second value is 1; or the first value is 1, and the second value is 0.

For example, M is 3, and i is 1 and 2. The first information may indicate the following content: A $1^{st}$ frequency band and a $2^{nd}$ frequency band in the three frequency bands are available for a plurality of frequency bands. An available frequency band list corresponding to the $1^{st}$ frequency band is a 3-bit binary vector: 101, indicating that information of the $1^{st}$ frequency band is available for the $1^{st}$ frequency band and a $3^{rd}$ frequency band in the three frequency bands. An available frequency band list corresponding to the $2^{nd}$ frequency band is a 3-bit binary vector: 111, indicating that information of the $2^{nd}$ frequency band is available for the $1^{st}$ frequency band, the $2^{nd}$ frequency band, and the $3^{rd}$ frequency band in the three frequency bands. The $3^{rd}$ frequency band in the three frequency bands is not available for a plurality of frequency bands, that is, information of the $3^{rd}$ frequency band is only available for the $3^{rd}$ frequency band. In this way, for example, the first frequency band corresponds to the $1^{st}$ frequency band in the three frequency bands. The terminal device may determine, based on the received first information, that the K second frequency bands corresponding to the first frequency band include the $2^{nd}$ frequency band. For example, the first frequency band corresponds to the $3^{rd}$ frequency band in the three frequency bands. The terminal device may determine, based on the received first information, that the K second frequency bands corresponding to the first frequency band include the $1^{st}$ frequency band and the $2^{nd}$ frequency band. For the $2^{nd}$ frequency band, only the information of the $2^{nd}$ frequency band may be available for the $2^{nd}$ frequency band, and the terminal device may independently perform CSI compression feedback on the $2^{nd}$ frequency band based on the single frequency band.

In another example, the available frequency band list corresponding to the $i^{th}$ frequency band may include identifiers of the $N_i$ frequency bands. Optionally, when an available frequency band list corresponding to one frequency band in the M frequency bands is null (null), it indicates that information of the frequency band may be available for all frequency bands in the M frequency bands. For example, the available frequency band list corresponding to the $i^{th}$ frequency band is an array whose length is $N_i$, that is, the array includes $N_i$ elements, the $N_i$ elements one-to-one correspond to the $N_i$ frequency bands, and a value of one element in the $N_i$ elements is an identifier of a frequency band corresponding to the element. Optionally, an identifier of a frequency band may be indicated by a sequence number of the frequency band in the M frequency bands. Correspondingly, for the first frequency band, the terminal device may parse the first information, to determine that available frequency band lists corresponding to the K second frequency bands include an identifier of the first frequency band.

For example, M is 3, and i is 1 and 2. In the first information, an available frequency band list corresponding to a $1^{st}$ frequency band includes 1 and 3, indicating that information of the $1^{st}$ frequency band is available for the $1^{st}$ frequency band and a $3^{rd}$ frequency band in the three frequency bands. An available frequency band list corresponding to a $2^{nd}$ frequency band is null, indicating that information of the $2^{nd}$ frequency band is available for the $1^{st}$ frequency band, the $2^{nd}$ frequency band, and the $3^{rd}$ frequency band in the three frequency bands. The $3^{rd}$ frequency band in the three frequency bands is not available for a plurality of frequency bands, that is, information of the $3^{rd}$ frequency band is only available for the $3^{rd}$ frequency band. In this way, for example, the first frequency band corresponds to the $1^{st}$ frequency band in the three frequency bands. The terminal device may determine that the K second frequency bands corresponding to the first frequency band include the $2^{nd}$ frequency band. For example, the first frequency band corresponds to the $3^{rd}$ frequency band in the three frequency bands. The terminal device may determine, based on the received first information, that the K second frequency bands corresponding to the first frequency band include the $1^{st}$ frequency band and the $2^{nd}$ frequency band. For the $2^{nd}$ frequency band, only the information of the $2^{nd}$ frequency band may be available for the $2^{nd}$ frequency band, and the terminal device may independently perform CSI compression feedback on the $2^{nd}$ frequency band based on the single frequency band.

In addition, it may be understood that, in frequency domain, locations of the first frequency band and the K second frequency bands may be contiguous or discontiguous. Alternatively, it may be described as that a frequency range corresponding to the first frequency band and frequency ranges corresponding to the K second frequency bands may be contiguous or discontiguous. When K is greater than 1, locations of the K second frequency bands may be contiguous, or locations of at least two second frequency bands in the K second frequency bands are discontiguous. Alternatively, when K is greater than 1, frequency ranges corresponding to the K second frequency bands may be contiguous, or frequency ranges corresponding to at least two second frequency bands in the K second frequency bands are discontiguous. This is not limited in embodiments of this application.

Further, the terminal device may determine the channel information of the K second frequency bands based on the downlink reference signal received on the K second frequency bands.

In an optional implementation, the terminal device may obtain, through estimation based on the downlink reference signal received on the K second frequency bands, the channel information of the K second frequency bands, or may be described as downlink channel information of the K second frequency bands. The channel information of the K second frequency bands includes downlink CSI corresponding to the K second frequency bands. It may be understood that the channel information of the K second frequency bands includes channel information of each second frequency band in the K second frequency bands, and the downlink CSI corresponding to the K second frequency bands includes downlink CSI corresponding to each second frequency band in the K frequency bands. In this manner, the channel information of the K second frequency bands indicates all channel characteristics of the K second frequency bands that are estimated based on the downlink reference signal.

In another optional implementation, the terminal device may process, by using an AI technology, the downlink reference signal received on the K second frequency bands, to obtain the channel information of the K second frequency bands. For example, a first model may be designed, where an input of the first model includes the downlink reference signal received on the K second frequency bands, and an output of the first model includes the channel information of the K second frequency bands. Channel estimation is performed by using the AI model, so that nonlinear transformation processing can be added, and a channel is closer to a real channel, thereby improving channel estimation effect.

In this manner, the channel information of the K second frequency bands output by the first model indicates all the channel characteristics of the K second frequency bands; or the channel information of the K second frequency bands output by the first model indicates channel characteristics of the overlapping part between the K second frequency bands and the first frequency band.

For ease of understanding, the following describes in detail a process of obtaining or training the first model. A model training node may train the first model by using a specified training data set, where the training data set includes a plurality of groups of data, and each group of data in the plurality of groups of data includes the downlink reference signal received by the terminal device on the K second frequency bands, real channel information of the K second frequency bands, and real channel information of the first frequency band.

For example, the channel information of the K second frequency bands output by the first model indicates all the channel characteristics of the K second frequency bands. A training process of the first model is as follows: The model training node inputs, to the first model, the downlink reference signal corresponding to the K second frequency bands in one group of data in the plurality of groups of data, to obtain channel information of the K second frequency bands, and the model training node calculates a difference between the channel information of the K second frequency bands output by the first model and the real channel information of the K second frequency bands. The model training node uses the difference as a loss function in the training process. If the loss function is less than a preset threshold, the training is stopped; otherwise, the first model is updated, to reduce the loss function. For example, the channel information of the K second frequency bands output by the first model indicates the channel characteristics of the overlapping part between the K second frequency bands and the first frequency band. A training process of the first model is as follows: The model training node inputs, to the first model, the downlink reference signal corresponding to the K second frequency bands in one group of data in the plurality of groups of data, to obtain channel information of the K second frequency bands, and the model training node calculates a difference between the channel information of the K second frequency bands output by the first model and the real channel information of the first frequency band. The model training node uses the difference as a loss function in the training process. If the loss function is less than a preset threshold, the training is stopped; otherwise, the first model is updated, to reduce the loss function.

In addition, it may be understood that the downlink reference signal used to determine the channel information of the K second frequency bands includes the downlink reference signal received by the terminal device on the K second frequency bands in S501; the downlink reference signal used to determine the channel information of the K second frequency bands includes the downlink reference signal historically received by the terminal device on the K second frequency bands before S501 and received by the terminal device on the K second frequency bands in S501; or S501 may be considered as an optional step, and when S501 is not performed, the downlink reference signal used to determine the channel information of the K second frequency bands includes the downlink reference signal that is received on the K second frequency bands and that is stored in the terminal device.

S503: The terminal device inputs the channel information of the first frequency band and the channel information of the K second frequency bands to a first encoder, to determine the first channel state indication information corresponding to the first frequency band.

The first channel state indication information corresponds to a part of channel information that is in the channel information of the first frequency band and that is not related to the channel information of the K second frequency bands. The first channel state indication information may be understood as information obtained after the part of channel information is compressed and quantized. For example, the first channel state indication information may be a bit sequence.

In an optional implementation, the first encoder has compression and quantization functions, and may compress and quantize channel information to obtain corresponding compressed and quantized information. In this case, the terminal device inputs the channel information of the first frequency band and the channel information of the K second frequency bands to the first encoder, to obtain the first channel state indication information corresponding to the first frequency band. In another optional implementation, the first encoder has a compression function but does not have a quantization function, and the first encoder only compress channel information to obtain corresponding compressed information. In this case, the terminal device inputs the channel information of the first frequency band and the channel information of the K second frequency bands to the first encoder, to obtain a third channel state indication information corresponding to the first frequency band. The third channel state indication information may be specifically a floating-point number sequence. In this way, the terminal device may quantize the third channel state indication information by using a quantizer, to obtain the first channel state indication information.

It may be understood that, second channel state indication information indicates the information obtained after the channel information of the first frequency band is compressed and quantized, and a sequence length corresponding to the first channel state indication information is less than a sequence length corresponding to the second channel state indication information.

S504: The terminal device sends the first channel state indication information to the network device. Correspondingly, the network device receives the first channel state indication information.

Optionally, corresponding to the description in S502, if the downlink reference signal used to determine the channel information of the K second frequency bands includes the downlink reference signal received by the terminal device on the K second frequency bands in S501, the terminal device may further perform the following step S505: S505: The terminal device sends, to the network device, the channel state indication information corresponding to the K second frequency bands.

In specific implementation, the terminal device may obtain the channel information of the K second frequency bands through estimation based on the downlink reference signal received on the K second frequency bands. In S505, the channel information of the K second frequency bands indicates all the channel characteristics of the K second frequency bands that are estimated based on the downlink reference signal. The terminal device may compress the channel information of the K second frequency bands, to determine the channel state indication information corresponding to the K second frequency bands, where the channel state indication information corresponding to the K second frequency bands indicates compressed information of the channel information of the K second frequency bands. Optionally, the channel state indication information corresponding to the K second frequency bands includes the compressed information of the channel information of the K second frequency bands, or includes compressed and quantized information of the channel information of the K second frequency bands.

For example, a second encoder having the compression and quantization functions may be configured in the terminal device, and the network device may input the channel information of the K second frequency bands to the second encoder, to obtain the channel state indication information corresponding to the K second frequency bands.

S506: The network device inputs the first channel state indication information and the channel information of the K second frequency bands to a first decoder, to restore the channel information of the first frequency band.

The restored channel information of the first frequency band indicates all the channel characteristics of the first frequency band.

In specific implementation, the first encoder and the first decoder belong to a same auto-encoder, and may be trained and used together. The first decoder has dequantization and decompression functions. The network device inputs the first channel state indication information and the channel information of the K second frequency bands to the first decoder, and an output of the first decoder includes the restored channel information of the first frequency band.

In addition, optionally, the first decoder may also have a decompression function but does not have a dequantization function. In this case, the network device may first dequantize the first channel state indication information by using a dequantizer, to restore the third channel state indication information described in S503, and then the network device inputs the third channel state indication information and the channel information of the K second frequency bands to the first decoder, to restore the channel information of the first frequency band.

The channel information of the K second frequency bands may be understood as auxiliary information used by the network device to restore the channel information of the first frequency band. The following describes in detail the channel information of the K second frequency bands input to the first decoder.

In an optional implementation, the network device may dequantize and decompress the channel state indication information corresponding to the K second frequency bands received in S505, to restore the channel information of the K second frequency bands.

For example, a second decoder having the dequantization and decompression functions may be configured in the network device, and the network device may input, to the second encoder, the channel state indication information corresponding to the K second frequency bands, to obtain the restored channel information of the K second frequency bands. It may be understood that, the second decoder is an inverse process of the second encoder described in S505, and the second encoder and the second decoder belong to a same auto-encoder, and may be trained and used together.

The network device may input the first channel state indication information and the restored channel information of the K second frequency bands to the first decoder.

In another optional implementation, a second model may be configured in the network device. An input of the second model includes the channel state indication information corresponding to the K second frequency bands, and an output of the second model includes the channel information of the K second frequency bands.

Optionally, the channel state indication information corresponding to the K second frequency bands input to the second model includes the channel state indication information corresponding to the K second frequency bands received by the network device in S505; the channel state indication information corresponding to the K second frequency bands input to the second model includes the channel state indication information corresponding to the K second frequency bands received by the network device in S505 and historically received before S505; or when S505 is used as an optional step, and S505 is not performed, the channel state indication information corresponding to the K second frequency bands input to the second model includes the channel state indication information corresponding to the K second frequency bands stored in the network device.

Optionally, the second model and the first model may be trained together, and the output of the second model is the same as the output of the first model; or a difference between the output of the second model and the output of the first model meets a specified threshold. Optionally, the input of the second model and the input of the first model meet a specific relationship. For example, when the input of the first model includes the downlink reference signal of the K second frequency bands received by the terminal device in S501, the input of the second model includes the channel state indication information corresponding to the K second frequency bands received by the network device in S505. For example, when the input of the first model includes the downlink reference signal of the K second frequency bands received by the terminal device in S501 and historically received before S501, the input of the second model includes the channel state indication information corresponding to the K second frequency bands received by the network device in S505 and historically received before S505. For another example, when the input of the first model includes the downlink reference signal of the K second frequency bands stored in the terminal device, the input of the second model includes the channel state indication information corresponding to the K second frequency bands stored in the network device.

Further, the network device may input, to the first decoder, the first channel state indication information and the channel information of the K second frequency bands output by the second model.

In the solution 1, the terminal device uses the channel correlation between the plurality of frequency bands, and in CSI compression and feedback processes on a single frequency band, indication of a same channel characteristic between the plurality of frequency bands can be reduced, thereby reducing CSI feedback overheads. The network device assists in restoring CSI of the single frequency band by using the channel correlation between the plurality of frequency bands, so that restoration precision of a channel of the single frequency band can be improved. The solution 1 may be applied to a downlink CSI feedback scenario.

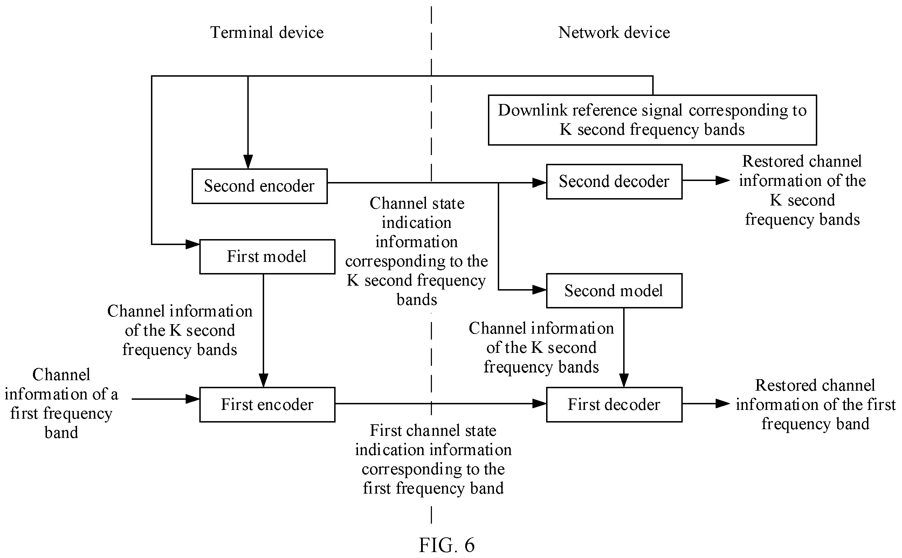

Based on the solution 1, refer to FIG. 6. An embodiment of this application further provides a diagram of model application. FIG. 6 shows the inputs and the outputs of the second encoder, the first model, and the first encoder in the terminal device, and the inputs and the outputs of the second decoder, the second model, and the first decoder in the network device.

Solution 2

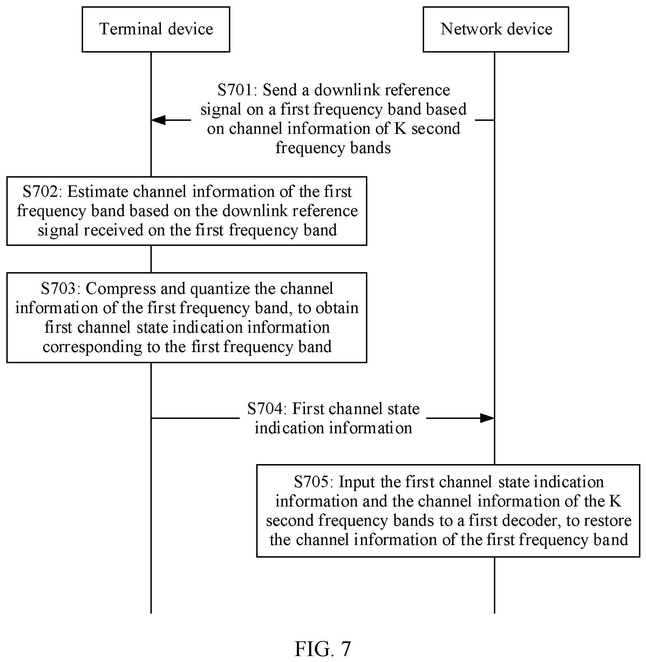

Refer to FIG. 7. An embodiment of this application provides a communication method. The method mainly includes the following procedure.

S701: A network device sends a downlink reference signal on a first frequency band based on channel information of K second frequency bands.

In specific implementation, there is channel correlation between the K second frequency bands and the first frequency band, and K is a positive integer. The network device may determine, based on the channel information of the K second frequency bands, a transmission mode of the downlink reference signal corresponding to the first frequency band. For example, the channel information of the K second frequency bands is capable of being used to restore channel information of the first frequency band, so that the network device can reduce a quantity of downlink reference signals sent on the first frequency band, thereby reducing transmission overheads. For another example, the network device may determine, based on the channel information of the K second frequency bands, time-frequency resources, an antenna port, and the like that are occupied for sending the downlink reference signal on the first frequency band. The network device may send the downlink reference signal on the first frequency band in the transmission mode of the downlink reference signal corresponding to the first frequency band.

In specific implementation, the network device may determine, with reference to the description in S502, the K second frequency bands that have the channel correlation with the first frequency band. Details are not described in this embodiment of this application. Further, the network device may determine the channel information of the K second frequency bands based on channel state indication information corresponding to the K second frequency bands sent by the terminal device most recently and/or historically. For a specific manner of determining the channel information of the K second frequency bands, refer to the description in S506 for understanding. For example, the network device may input, to the second model, the channel state indication information corresponding to the K second frequency bands, to determine the channel information of the K second frequency bands. Details are not described in this embodiment of this application.

S702: The terminal device estimates the channel information of the first frequency band based on the downlink reference signal received on the first frequency band.

Corresponding to the description in S701, when the network device reduces the downlink reference signal sent on the first frequency band, the channel information of the first frequency band estimated by the terminal device may indicate some channel characteristics of the first frequency band.

In specific implementation, the terminal device may perform channel measurement and interference measurement on the downlink reference signal received on the first frequency band to estimate the channel information of the first frequency band. It may be understood that the channel information of the first frequency band includes downlink CSI of the first frequency band.

S703: The terminal device compresses and quantizes the channel information of the first frequency band, to obtain first channel state indication information corresponding to the first frequency band.

The first channel state indication information may be understood as compressed and quantized information of the channel information of the first frequency band. For example, the compressed and quantized information may be a bit sequence.

In specific implementation, a third encoder may be configured in the terminal device. In an optional implementation, the third encoder may have compression and quantization functions, and is configured to compress and quantize channel information to obtain corresponding compressed and quantized information. The terminal device may input, to the third encoder, the channel information of the first frequency band estimated in S702, and an output of the third encoder includes the first channel state indication information corresponding to the first frequency band. In another optional implementation, the third encoder may have a compression function but does not have a quantization function, and is configured to compress channel information to obtain corresponding compressed information. The terminal device may input, to the third encoder, the channel information of the first frequency band estimated in S702, and an output of the third encoder includes compressed information of the channel information of the first frequency band. In this way, the terminal device may quantize the compressed information by using a quantizer, to obtain the first channel state indication information corresponding to the first frequency band.

S704: The terminal device sends the first channel state indication information to the network device.

S705: The network device inputs the first channel state indication information and the channel information of the K second frequency bands to a first decoder, to restore the channel information of the first frequency band.

For implementation of this step, refer to S506. Details are not described again in this embodiment of this application.

In the solution 2, the network device determines, by using channel correlation between a plurality of frequency bands, a mode of transmitting a downlink reference signal on a single frequency band, for example, reducing a quantity of downlink reference signals sent on the single frequency band, and reducing transmission overheads. The terminal device performs estimation based on a small quantity of downlink reference signals, so that CSI feedback overheads can be reduced in CSI compression and feedback processes. In a CSI restoration process, the network device assists in restoring CSI of the single frequency band by using the channel correlation between the plurality of frequency bands, so that impact of an insufficient quantity of downlink reference signals used for channel estimation on CSI restoration can be avoided, and CSI restoration precision can be improved. The solution 2 may be applied to a downlink CSI feedback scenario.

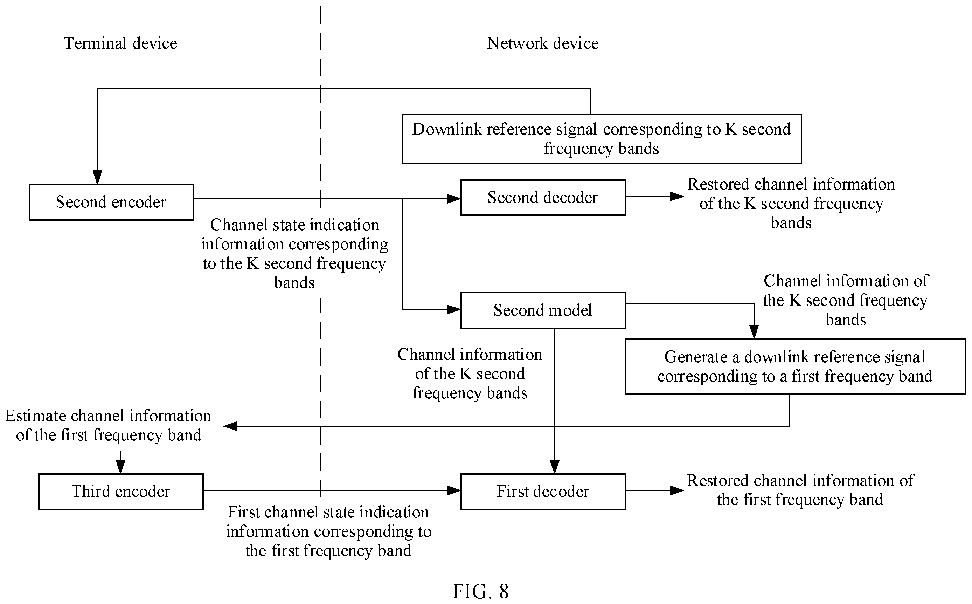

Based on the solution 2, refer to FIG. 8. An embodiment of this application further provides a diagram of model application. FIG. 8 shows the inputs and the outputs of the second encoder and the third encoder in the terminal device, and the inputs and the outputs of the second model and the first decoder in the network device.

Solution 3

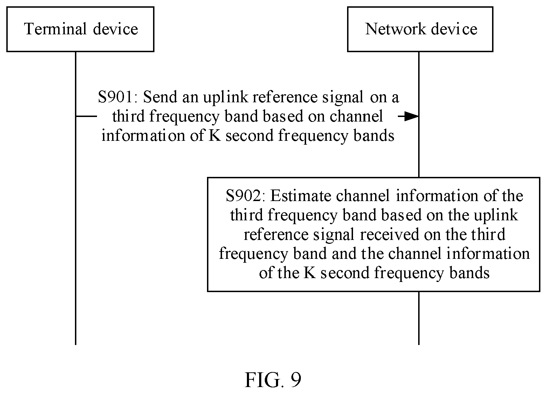

Refer to FIG. 9. An embodiment of this application provides a communication method. The method mainly includes the following procedure.

S901: A terminal device sends an uplink reference signal on a third frequency band based on channel information of K second frequency bands.

That there is channel correlation between the K second frequency bands and the third frequency band may also be described as that the channel information of the K second frequency bands is correlated with channel information of the third frequency band, where K is a positive integer. The third frequency band is used for uplink communication, and the channel information of the third frequency band may also be described as uplink channel information.

Optionally, the channel correlation between the K second frequency bands and the third frequency band may be preconfigured, and the terminal device may determine, based on the configuration, the K second frequency bands that have the channel correlation with the third frequency band; or the network device indicates, to the terminal device, that the K second frequency bands have the channel correlation with the third frequency band. For example, the network device sends second information to the terminal device. For the second information, refer to the first information in S502. For example, the second information may indicate an association relationship between a plurality of frequency bands. The association relationship between the plurality of frequency bands may include one or more of the following: Channel information of any frequency band in the plurality of frequency bands may be used to determine a transmission mode of an uplink reference signal corresponding to at least one frequency band in the plurality of frequency bands; channel state indication information or the channel information corresponding to the any frequency band may be used to estimate uplink channel information of at least one frequency band in the plurality of frequency bands; and frequency bands having channel correlation exist in the plurality of frequency bands.

The plurality of frequency bands include the third frequency band and the K second frequency bands. Correspondingly, from a perspective of the third frequency band, the second information indicates one or more of the following: The channel information of the K second frequency bands is capable of being used to determine the transmission mode of the uplink reference signal on the third frequency band; the channel information of the K second frequency bands is correlated with the channel information of the third frequency band; and channel state indication information corresponding to the K second frequency bands or the channel information of the K second frequency bands is capable of being used to estimate the channel information of the third frequency band. The terminal device determines the K second frequency bands based on the second information.

Similarly, M indicates a quantity of frequency bands, and the second information may also include attribute information of some or all frequency bands in the M frequency bands, so that the second information can indicate whether each frequency band in the plurality of frequency bands is available for a plurality of frequency bands. The second information indicates that one frequency band is available for a plurality of frequency bands, and may indicate one or more of the following: Channel information of the frequency band may be used to determine channel state indication information corresponding to a plurality of frequency bands in the M frequency bands; the channel information of the frequency band or channel state indication information corresponding to the frequency band may be used to estimate channel information corresponding to the plurality of frequency bands in the M frequency bands; and channel information of an $i^{th}$ frequency band is correlated with the plurality of frequency bands in the M frequency bands. The second information may also include available frequency band lists corresponding to some or all frequency bands in the M frequency bands. For understanding of the available frequency band list, refer to the description in S502. Details are not described again in this embodiment of this application.

In addition, optionally, the first information and the second information may also be combined into one piece of signaling. The signaling may indicate the association relationship between the plurality of frequency bands that is applied to the downlink CSI feedback scenario and that is described in S502, and indicate the association relationship between the plurality of frequency bands that is applied to an uplink CSI estimation scenario and that is described in S901.

Further, after determining the K second frequency bands that have the channel correlation with the third frequency band, the terminal device may determine the channel information of the K second frequency bands based on a downlink reference signal received on the K second frequency bands. For a manner of determining the information of the K second frequency bands, refer to the description in S502. For example, the terminal device inputs, to the first model, the downlink reference signal received on the K second frequency bands, to obtain the channel information of the K second frequency bands. Details are not described again in this embodiment of this application.

Finally, the terminal device may determine, based on the channel information of the K second frequency bands, the transmission mode of the uplink reference signal corresponding to the third frequency band. For example, the channel information of the K second frequency bands is capable of being used to estimate the channel information of the third frequency band, so that the terminal device can reduce a quantity of uplink reference signals sent on the third frequency band, thereby reducing transmission overheads. For another example, the terminal device may determine, based on the channel information of the K second frequency bands, time-frequency resources, an antenna port, and the like that are occupied for sending the uplink reference signal on the third frequency band. The terminal device may send the uplink reference signal on the third frequency band in the transmission mode of the uplink reference signal corresponding to the third frequency band.

S902: The network device estimates the channel information of the third frequency band based on the uplink reference signal received on the third frequency band and the channel information of the K second frequency bands.

In specific implementation, the channel information of the K second frequency bands may be understood as auxiliary information used by the network device to estimate the channel information of the third frequency band. For the channel information of the K second frequency bands in step S902, refer to the channel information of the K second frequency bands in S506 for understanding. For example, the network device may input, to the second model, the received channel state indication information corresponding to the K second frequency bands, to obtain the channel information of the K second frequency bands. Details are not described again in this embodiment of this application.

In the solution 3, the terminal device determines, by using channel correlation between a plurality of frequency bands, a mode of transmitting an uplink reference signal on a single frequency band, for example, reducing a quantity of uplink reference signals sent on the single frequency band, and reducing transmission overheads. In an uplink CSI estimation process, the network device estimates uplink CSI of the single frequency band with reference to the channel correlation between the plurality of frequency bands and the received uplink reference signal, so that impact of an insufficient quantity of sent uplink reference signals on uplink CSI estimation can be avoided, and uplink CSI estimation precision can be improved. The solution 3 may be applied to the uplink CSI estimation scenario.

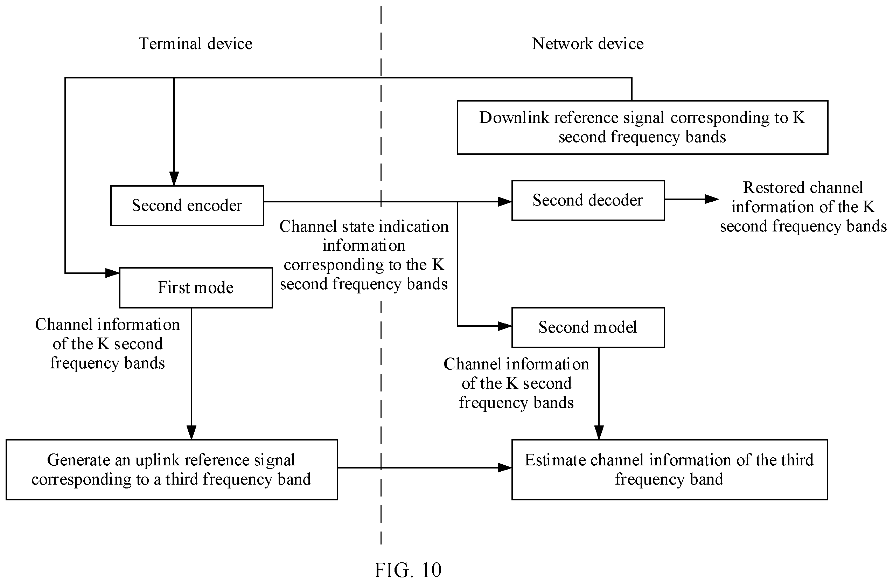

Based on the solution 3, refer to FIG. 10. An embodiment of this application further provides a diagram of model application. FIG. 8 shows the inputs and the outputs of the second encoder and the first model in the terminal device, and the inputs and the outputs of the second decoder and the second model in the network device.

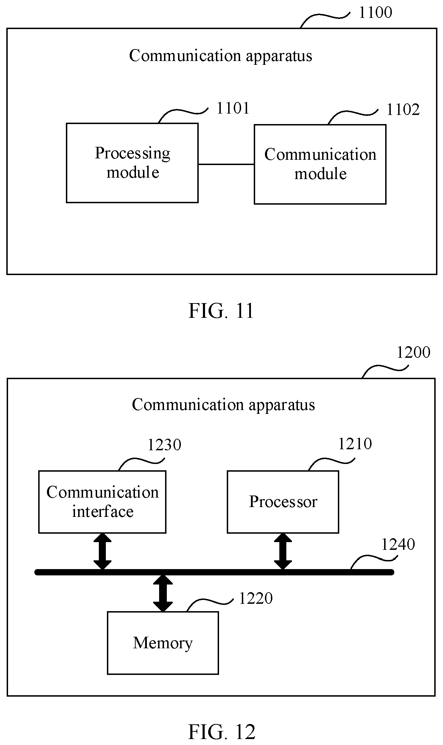

Based on a same concept, refer to FIG. 11. This disclosure provides a communication apparatus 1100. The communication apparatus 1100 includes a processing module 1101 and a communication module 1102. The communication apparatus 1100 may be a terminal device, or may be a communication apparatus that is used in a terminal device or used together with a terminal device and that can implement a communication method performed on a terminal device side. Alternatively, the communication apparatus 1100 may be a network device, or may be a communication apparatus that is used in a network device or used together with a network device and that can implement a communication method performed on a network device side.

The communication module may also be referred to as a transceiver module, a transceiver, a transceiver machine, a transceiver apparatus, or the like. The processing module may also be referred to as a processor, a processing board, a processing unit, a processing apparatus, or the like. Optionally, the communication module is configured to perform a sending operation and a receiving operation on the terminal device side or the network device side in the foregoing method. A component configured to implement a receiving function in the communication module may be considered as a receiving unit, and a component configured to implement a sending function in the communication module may be considered as a sending unit. In other words, the communication module includes the receiving unit and the sending unit.

When the communication apparatus 1100 is used in the terminal device, the processing module 1101 may be configured to implement a processing function of the terminal device in the examples in FIG. 5 to FIG. 10, and the communication module 1102 may be configured to implement receiving and sending functions of the terminal device in the examples in FIG. 5 to FIG. 10. Optionally, for the communication apparatus, refer to the third aspect and the possible designs in the third aspect in the summary.

When the communication apparatus 1100 is used in the network device, the processing module 1101 may be configured to implement a processing function of the network device in the examples in FIG. 5 to FIG. 10, and the communication module 1102 may be configured to implement receiving and sending functions of the network device in the examples in FIG. 5 to FIG. 10. Optionally, for the communication apparatus, refer to the fourth aspect and the possible designs in the fourth aspect in the summary.

In addition, it should be noted that, in a possible design, the communication module and/or the processing module may be implemented by using a virtual module. For example, the processing module may be implemented by using a software functional unit or a virtual apparatus, and the communication module may be implemented by using a software function or a virtual apparatus. In another possible design, the processing module or the communication module may be implemented by using a physical apparatus. For example, if the apparatus is implemented by using a chip/chip circuit, the communication module may be an input/output circuit and/or a communication interface, and performs an input operation (corresponding to the receiving operation) and an output operation (corresponding to the sending operation). The processing module is an integrated processor, a microprocessor, or an integrated circuit.

Division into the modules in this disclosure is an example, is merely logical function division, and may be other division in an actual implementation. In addition, functional modules in the examples in this disclosure may be integrated into one processor, may exist alone physically, or two or more modules may be integrated into one module. The integrated module may be implemented in a form of hardware, or may be implemented in a form of a software functional module.

Based on a same technical concept, this disclosure further provides a communication apparatus 1200. For example, the communication apparatus 1200 may be a chip or a chip system. Optionally, in this disclosure, the chip system may include a chip, or may include a chip and another discrete component.

The communication apparatus 1200 may be configured to implement a function of any network element in the communication system described in the foregoing examples. The communication apparatus 1200 may include at least one processor 1210. Optionally, the processor 1210 is coupled to a memory. The memory may be located in the apparatus, the memory may be integrated with the processor, or the memory may be located outside the apparatus. For example, the communication apparatus 1200 may further include at least one memory 1220. The memory 1220 stores a computer program, a computer program or instructions, and/or data necessary for implementing any one of the foregoing examples. The processor 1210 may execute the computer program stored in the memory 1220, to complete the method in any one of the foregoing examples.

The communication apparatus 1200 may further include a communication interface 1230, and the communication apparatus 1200 may exchange information with another device through the communication interface 1230. For example, the communication interface 1230 may be a transceiver, a circuit, a bus, a module, a pin, or a communication interface of another type. When the communication apparatus 1200 is a chip-type apparatus or circuit, the communication interface 1230 in the apparatus 1200 may alternatively be an input/output circuit, and may input information (or referred to as receiving information) and output information (or referred to as sending information). The processor is an integrated processor, a microprocessor, an integrated circuit, or a logic circuit. The processor may determine output information based on input information.

Couplings in this disclosure are indirect couplings or communication connections between apparatuses, units, or modules, and may be electrical, mechanical, or in another form, and are used for information exchange between the apparatuses, the units, and the modules. The processor 1210 may operate cooperatively with the memory 1220 and the communication interface 1230. A specific connection medium between the processor 1210, the memory 1220, and the communication interface 1230 is not limited in this disclosure.

Optionally, refer to FIG. 12. The processor 1210, the memory 1220, and the communication interface 1230 are connected to each other through a bus 1240. The bus 1240 may be a peripheral component interconnect (peripheral component interconnect, PCI) bus, an extended industry standard architecture (extended industry standard architecture, EISA) bus, and or the like. The bus may be classified into an address bus, a data bus, a control bus, and the like. For ease of indication, only one thick line indicates the bus in FIG. 12, but this does not mean that there is only one bus or only one type of bus.

In this disclosure, the processor may be a general-purpose processor, a digital signal processor, an application-specific integrated circuit, a field programmable gate array or another programmable logic device, a discrete gate or a transistor logic device, or a discrete hardware component, and may implement or perform methods, steps, and logical block diagrams that are disclosed in this disclosure. The general-purpose processor may be a microprocessor, any conventional processor or the like. The steps of the methods disclosed with reference to this disclosure may be directly implemented by a hardware processor, or may be performed by a combination of hardware in the processor and a software module.

In this disclosure, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can be used to carry or store expected program code in a form of an instruction or a data structure and that can be accessed by a computer, but is not limited thereto. The memory in this disclosure may alternatively be a circuit or any other apparatus that can implement a storage function, and is configured to store program instructions and/or data.

When the communication apparatus 1200 may be used in a terminal device, the communication apparatus 1200 may be a terminal device, or may be an apparatus that can support the terminal device in implementing a function of the terminal device in any one of the foregoing examples. The memory 1220 stores a computer program (or instructions) and/or data for implementing the functions of the terminal device in any one of the foregoing examples. The processor 1210 may execute the computer program stored in the memory 1220, to complete the method performed by the terminal device in any one of the foregoing examples. When the communication apparatus 1200 is used in the terminal device, the communication interface in the communication apparatus 1200 may be configured to: interact with a network device, and send information to the network device or receive information from the network device.

In specific implementation, the processor 1210 is configured to input channel information of a first frequency band and channel information of K second frequency bands to a first encoder, to determine first channel state indication information corresponding to the first frequency band, where the channel information of the K second frequency bands is correlated with the channel information of the first frequency band, and K is a positive integer.

The communication interface 1230 is configured to send the first channel state indication information.

A sequence length corresponding to the first channel state indication information is less than a sequence length corresponding to second channel state indication information, and the second channel state indication information indicates compressed information of the channel information of the first frequency band.

In an optional implementation, the communication interface 1230 is further configured to receive first information from a network device, where the first information indicates one or more of the following: the channel information of the K second frequency bands is capable of being used to determine the first channel state indication information; the channel information of the K second frequency bands is correlated with the channel information of the first frequency band; and the channel information of the K second frequency bands is capable of being used to restore the channel information of the first frequency band. Optionally, the first information includes identifiers of the K second frequency bands and an identifier of the first frequency band.

In an optional implementation, the processor 1210 is further configured to compress the channel information of the K second frequency bands, to determine channel state indication information corresponding to the K second frequency bands; and the communication module is further configured to send the channel state indication information corresponding to the K second frequency bands.

In an optional implementation, the processor 1210 is further configured to input, to a first model, a downlink reference signal received on the K second frequency bands, to obtain the channel information of the K second frequency bands.

In an optional implementation, the channel information of the K second frequency bands is correlated with channel information of a third frequency band used for uplink transmission, and the processor 1210 is further configured to send an uplink reference signal on the third frequency band based on the channel information of the K second frequency bands.

In an optional implementation, the communication interface 1230 is further configured to receive second information from the network device, where the second information indicates one or more of the following: the channel information of the K second frequency bands is capable of being used to determine a transmission mode of the uplink reference signal on the third frequency band; the channel information of the K second frequency bands is correlated with the channel information of the third frequency band; and the channel information of the K second frequency bands is capable of being used to estimate the channel information of the third frequency band.

When the communication apparatus 1200 may be used in a network device, the communication apparatus 1200 may be a network device, or may be an apparatus that can support the network device in implementing a function of the network device in any one of the foregoing examples. The memory 1220 stores a computer program (or instructions) and/or data for implementing the functions of the network device in any one of the foregoing examples. The processor 1210 may execute the computer program stored in the memory 1220, to complete the method performed by the network device in any one of the foregoing examples. When the communication apparatus 1200 is used in the network device, the communication interface in the communication apparatus 1200 may be configured to: interact with a terminal device, and send information to the terminal device or receive information from the terminal device.

In specific implementation, the communication interface 1230 is configured to receive first channel state indication information from a terminal device, where the first channel state indication information corresponds to a first frequency band, channel information of the first frequency band is correlated with channel information of K second frequency bands, and K is a positive integer.

The processor 1210 is configured to input the first channel state indication information and the channel information of the K second frequency bands to a first decoder, to restore the channel information of the first frequency band.

A sequence length corresponding to the first channel state indication information is less than a sequence length corresponding to second channel state indication information, and the second channel state indication information indicates compressed information of the channel information of the first frequency band.

In an optional implementation, the communication interface 1230 is further configured to send first information, where the first information indicates one or more of the following: the channel information of the K second frequency bands is capable of being used to determine the first channel state indication information; the channel information of the K second frequency bands is correlated with the channel information of the first frequency band; and the channel information of the K second frequency bands is capable of being used to restore the channel information of the first frequency band. Optionally, the first information includes identifiers of the K second frequency bands and an identifier of the first frequency band.

In an optional implementation, the communication interface 1230 is further configured to receive, from the terminal device, channel state indication information corresponding to the K second frequency bands; and the processor 1210 is further configured to input, to a second model, the channel state indication information corresponding to the K second frequency bands, to obtain the channel information of the K second frequency bands.

In an optional implementation, the processor 1210 is further configured to send a downlink reference signal on the first frequency band based on the channel information of the K second frequency bands.

In an optional implementation, the communication interface 1230 is further configured to receive an uplink reference signal from the terminal device on a third frequency band, where channel information of the third frequency band is correlated with the channel information of the K second frequency bands; and the processor 1210 is further configured to estimate the channel information of the third frequency band based on the uplink reference signal and the channel information of the K second frequency bands.

In an optional implementation, the communication interface 1230 is further configured to send second information, where the second information indicates one or more of the following: the channel information of the K second frequency bands is capable of being used to determine a transmission mode of the uplink reference signal on the third frequency band; the channel information of the K second frequency bands is correlated with the channel information of the third frequency band; and the channel information of the K second frequency bands is capable of being used to estimate the channel information of the third frequency band.

The communication apparatus 1200 provided in this example may be used in the network device to complete the method performed by the network device, or may be used in the terminal device to complete the method performed by the terminal device. Therefore, for technical effect that can be achieved by the communication apparatus 1200, refer to the foregoing method examples. Details are not described herein again.

Based on the foregoing examples, this disclosure provides a communication system, including a network device and a terminal device. The network device and the terminal device can implement the communication methods provided in the examples shown in FIG. 5 to FIG. 10.

All or some of the technical solutions provided in this disclosure may be implemented by software, hardware, firmware, or any combination thereof. When software is used to implement the technical solutions, all or some of the technical solutions may be implemented in a form of a computer program product. The computer program product includes one or more computer instructions. When the computer program instructions are loaded and executed on a computer, the procedures or functions according to this disclosure are all or partially generated. The computer may be a general-purpose computer, a dedicated computer, a computer network, a terminal device, a network device, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium, or the like.

In this disclosure, without a logical contradiction, mutual reference can be made between examples. For example, mutual reference can be made between methods and/or terms in method embodiments, mutual reference can be made between functions and/or terms in apparatus embodiments, and mutual reference can be made between functions and/or terms in apparatus examples and method examples.

It is clear that a person skilled in the art can make various modifications and variations to this disclosure without departing from the scope of this disclosure. This disclosure is intended to cover these modifications and variations of this disclosure provided that they fall within the scope of protection defined by the following claims and their equivalent technologies.

## Claims

1. A communication method, applied to a terminal device and comprising:

   inputting channel information of a first frequency band and channel information of K second frequency bands to a first encoder, to determine first channel state indication information corresponding to the first frequency band, wherein the channel information of the K second frequency bands is correlated with the channel information of the first frequency band, and K is a positive integer; and
   sending the first channel state indication information.

2. The method according to claim 1, wherein a sequence length corresponding to the first channel state indication information is less than a sequence length corresponding to second channel state indication information, and the second channel state indication information indicates compressed information of the channel information of the first frequency band.

3. The method according to claim 1 or 2, further comprising:
   receiving first information from a network device, wherein the first information indicates one or more of the following:

   the channel information of the K second frequency bands is capable of being used to determine the first channel state indication information;
   the channel information of the K second frequency bands is correlated with the channel information of the first frequency band; and
   the channel information of the K second frequency bands is capable of being used to restore the channel information of the first frequency band.

4. The method according to claim 3, wherein the first information comprises identifiers of the K second frequency bands and an identifier of the first frequency band.

5. The method according to any one of claims 1 to 4, further comprising:

compressing the channel information of the K second frequency bands, to determine channel state indication information corresponding to the K second frequency bands; and

sending the channel state indication information corresponding to the K second frequency bands.

6. The method according to any one of claims 1 to 5, further comprising:
inputting, to a first model, a downlink reference signal received on the K second frequency bands, to obtain the channel information of the K second frequency bands.

7. The method according to any one of claims 1 to 6, wherein the channel information of the K second frequency bands is correlated with channel information of a third frequency band used for uplink transmission, and the method further comprises:
sending an uplink reference signal on the third frequency band based on the channel information of the K second frequency bands.

8. The method according to claim 7, further comprising:
receiving second information from the network device, wherein the second information indicates one or more of the following:

the channel information of the K second frequency bands is capable of being used to determine a transmission mode of the uplink reference signal on the third frequency band;
the channel information of the K second frequency bands is correlated with the channel information of the third frequency band; and
the channel information of the K second frequency bands is capable of being used to estimate the channel information of the third frequency band.

9. A communication method, applied to a network device and comprising:

receiving first channel state indication information from a terminal device, wherein the first channel state indication information corresponds to a first frequency band, channel information of the first frequency band is correlated with channel information of the K second frequency bands, and K is a positive integer; and
inputting the first channel state indication information and the channel information of the K second frequency bands to a first decoder, to restore the channel information of the first frequency band.

10. The method according to claim 9, wherein a sequence length corresponding to the first channel state indication information is less than a sequence length corresponding to second channel state indication information, and the second channel state indication information indicates compressed information of the channel information of the first frequency band.

11. The method according to claim 9 or 10, further comprising:
sending first information, wherein the first information indicates one or more of the following:

the channel information of the K second frequency bands is capable of being used to determine the first channel state indication information;
the channel information of the K second frequency bands is correlated with the channel information of the first frequency band; and
the channel information of the K second frequency bands is capable of being used to restore the channel information of the first frequency band.

12. The method according to claim 11, wherein the first information comprises identifiers of the K second frequency bands and an identifier of the first frequency band.

13. The method according to any one of claims 9 to 12, further comprising:

receiving, from the terminal device, channel state indication information corresponding to the K second frequency bands; and
inputting, to a second model, the channel state indication information corresponding to the K second frequency bands, to obtain the channel information of the K second frequency bands.

**14.** The method according to any one of claims 9 to 13, further comprising:
sending a downlink reference signal on the first frequency band based on the channel information of the K second frequency bands.

**15.** The method according to any one of claims 9 to 14, further comprising:

receiving an uplink reference signal from the terminal device on a third frequency band, wherein channel information of the third frequency band is correlated with the channel information of the K second frequency bands; and
estimating the channel information of the third frequency band based on the uplink reference signal and the channel information of the K second frequency bands.

**16.** The method according to claim 15, further comprising:
sending second information, wherein the second information indicates one or more of the following:

the channel information of the K second frequency bands is capable of being used to determine a transmission mode of the uplink reference signal on the third frequency band;
the channel information of the K second frequency bands is correlated with the channel information of the third frequency band; and
the channel information of the K second frequency bands is capable of being used to estimate the channel information of the third frequency band.

**17.** A communication apparatus, comprising a processing module and a communication module, wherein

the processing module is configured to input channel information of a first frequency band and channel information of K second frequency bands to a first encoder, to determine first channel state indication information corresponding to the first frequency band, wherein the channel information of the K second frequency bands is correlated with the channel information of the first frequency band, and K is a positive integer; and
the communication module is configured to send the first channel state indication information.

**18.** The apparatus according to claim 17, wherein a sequence length corresponding to the first channel state indication information is less than a sequence length corresponding to second channel state indication information, and the second channel state indication information indicates compressed information of the channel information of the first frequency band.

**19.** The apparatus according to claim 17 or 18, wherein the communication module is further configured to receive first information from a network device, wherein the first information indicates one or more of the following:

the channel information of the K second frequency bands is capable of being used to determine the first channel state indication information;
the channel information of the K second frequency bands is correlated with the channel information of the first frequency band; and
the channel information of the K second frequency bands is capable of being used to restore the channel information of the first frequency band.

**20.** The apparatus according to claim 19, wherein the first information comprises identifiers of the K second frequency bands and an identifier of the first frequency band.

**21.** The apparatus according to any one of claims 17 to 20, wherein

the processing module is further configured to compress the channel information of the K second frequency bands, to determine channel state indication information corresponding to the K second frequency bands; and
the communication module is further configured to send the channel state indication information corresponding to the K second frequency bands.

**22.** The apparatus according to any one of claims 17 to 21, wherein the processing module is further configured to input, to a first model, a downlink reference signal received on the K second frequency bands, to obtain the channel information of the K second frequency bands.

23. The apparatus according to any one of claims 17 to 22, wherein the channel information of the K second frequency bands is correlated with channel information of a third frequency band used for uplink transmission, and the processing module is further configured to send an uplink reference signal on the third frequency band based on the channel information of the K second frequency bands.

24. The apparatus according to claim 23, wherein the communication module is further configured to receive second information from the network device, wherein the second information indicates one or more of the following:

the channel information of the K second frequency bands is capable of being used to determine a transmission mode of the uplink reference signal on the third frequency band;
the channel information of the K second frequency bands is correlated with the channel information of the third frequency band; and
the channel information of the K second frequency bands is capable of being used to estimate the channel information of the third frequency band.

25. A communication apparatus, comprising a processing module and a communication module, wherein

the communication module is configured to receive first channel state indication information from a terminal device, wherein the first channel state indication information corresponds to a first frequency band, channel information of the first frequency band is correlated with channel information of the K second frequency bands, and K is a positive integer; and
the processing module is configured to input the first channel state indication information and the channel information of the K second frequency bands to a first decoder, to restore the channel information of the first frequency band.

26. The apparatus according to claim 25, wherein a sequence length corresponding to the first channel state indication information is less than a sequence length corresponding to second channel state indication information, and the second channel state indication information indicates compressed information of the channel information of the first frequency band.

27. The apparatus according to claim 25 or 26, wherein the communication module is further configured to send first information, wherein the first information indicates one or more of the following:

the channel information of the K second frequency bands is capable of being used to determine the first channel state indication information;
the channel information of the K second frequency bands is correlated with the channel information of the first frequency band; and
the channel information of the K second frequency bands is capable of being used to restore the channel information of the first frequency band.

28. The apparatus according to claim 27, wherein the first information comprises identifiers of the K second frequency bands and an identifier of the first frequency band.

29. The apparatus according to any one of claims 25 to 28, wherein

the communication module is further configured to receive, from the terminal device, channel state indication information corresponding to the K second frequency bands; and
the processing module is further configured to input, to a second model, the channel state indication information corresponding to the K second frequency bands, to obtain the channel information of the K second frequency bands.

30. The apparatus according to any one of claims 25 to 29, wherein the processing module is further configured to send a downlink reference signal on the first frequency band based on the channel information of the K second frequency bands.

31. The apparatus according to any one of claims 25 to 30, wherein

the communication module is further configured to receive an uplink reference signal from the terminal device on a third frequency band, wherein channel information of the third frequency band is correlated with the channel information of the K second frequency bands; and

the processing module is further configured to estimate the channel information of the third frequency band based on the uplink reference signal and the channel information of the K second frequency bands.

32. The apparatus according to claim 31, wherein the communication module is further configured to send second information, wherein the second information indicates one or more of the following:

the channel information of the K second frequency bands is capable of being used to determine a transmission mode of the uplink reference signal on the third frequency band;

the channel information of the K second frequency bands is correlated with the channel information of the third frequency band; and

the channel information of the K second frequency bands is capable of being used to estimate the channel information of the third frequency band.

33. A communication apparatus, comprising:

a processor, wherein the processor is configured to execute computer program instructions stored in a memory, so that the apparatus performs the method according to any one of claims 1 to 8.

34. A communication apparatus, comprising:

a processor, wherein the processor is configured to execute computer program instructions stored in a memory, so that the apparatus performs the method according to any one of claims 9 to 16.

35. A communication system, comprising the communication apparatus according to any one of claims 17 to 24 and claim 33, and the communication apparatus according to any one of claims 25 to 32 and claim 34.

36. A computer-readable storage medium, wherein the computer-readable storage medium stores instructions, and when the instructions are run on a computer, the computer is enabled to perform the method according to any one of claims 1 to 8 or the method according to any one of claims 9 to 16.

37. A computer program product, comprising instructions, wherein when the instructions are run on a computer, the computer is enabled to perform the method according to any one of claims 1 to 8 or the method according to any one of claims 9 to 16.

38. A chip, wherein the chip is configured to read a computer program stored in a memory, to perform the method according to any one of claims 1 to 8 or the method according to any one of claims 9 to 16.

39. A communication apparatus, comprising modules configured to implement the method according to any one of claims 1 to 8 or modules configured to implement the method according to any one of claims 9 to 16.

FIG. 1

$$y = f\left(\sum_{i=0}^{n} w_i x_i + b\right)$$

FIG. 2A

FIG. 2B

FIG. 2C

AI network
element 140

Network
device 110

Terminal
device 120

Terminal
device 130

FIG. 3

(a)    (b)    (c)

FIG. 4A

FIG. 4B

FIG. 4C

FIG. 4D

Terminal device

Network device

← — S501: Downlink reference signal — -

S502: Determine channel information of a first frequency band and channel information of K second frequency bands

S503: Input the channel information of the first frequency band and the channel information of the K second frequency bands to a first encoder, to determine first channel state indication information corresponding to the first frequency band

S504: First channel state indication information →

S505: Channel state indication information corresponding to the K second frequency bands — →

S506: Input the first channel state indication information and the channel information of the K second frequency bands to a first decoder, to restore the channel information of the first frequency band

FIG. 5

EP 4 572 172 A1

Terminal device | Network device

Downlink reference signal corresponding to
K second frequency bands

Second encoder → Second decoder → Restored channel information of the K second frequency bands

First model

Channel information of the K second frequency bands

Channel state indication information corresponding to the K second frequency bands

Second model

Channel information of the K second frequency bands

Channel information of a first frequency band → First encoder → First decoder → Restored channel information of the first frequency band

First channel state indication information corresponding to the first frequency band

FIG. 6

| Terminal device | | Network device |
|---|---|---|

S701: Send a downlink reference
signal on a first frequency band based
on channel information of K second
frequency bands

S702: Estimate channel information of the first
frequency band based on the downlink reference
signal received on the first frequency band

S703: Compress and quantize the channel
information of the first frequency band, to obtain
first channel state indication information
corresponding to the first frequency band

S704: First channel state
indication information

S705: Input the first channel state indication
information and the channel information of the K
second frequency bands to a first decoder, to restore
the channel information of the first frequency band

FIG. 7

Network device

Terminal device

Downlink reference signal corresponding to K second frequency bands

Restored channel information of the K second frequency bands

Channel information of the K second frequency bands

Generate a downlink reference signal corresponding to a first frequency band

Restored channel information of the first frequency band

Second decoder

Second model

First decoder

Channel information of the K second frequency bands

Channel state indication information corresponding to the K second frequency bands

Second encoder

Estimate channel information of the first frequency band

First channel state indication information corresponding to the first frequency band

Third encoder

FIG. 8

| Terminal device | | Network device |
|---|---|---|

S901: Send an uplink reference signal on a third frequency band based on channel information of K second frequency bands

S902: Estimate channel information of the third frequency band based on the uplink reference signal received on the third frequency band and the channel information of the K second frequency bands

FIG. 9

Terminal device | Network device

Downlink reference signal corresponding to K second frequency bands

Second encoder

Channel state indication information corresponding to the K second frequency bands

Second decoder

Restored channel information of the K second frequency bands

First mode

Channel information of the K second frequency bands

Second model

Channel information of the K second frequency bands

Generate an uplink reference signal corresponding to a third frequency band

Estimate channel information of the third frequency band

FIG. 10

1100

Communication apparatus

1101

Processing module

1102

Communication module

FIG. 11

1200

Communication apparatus

1230

Communication interface

1210

Processor

1240

1220

Memory

FIG. 12

## INTERNATIONAL SEARCH REPORT

| International application No. |
| --- |
| **PCT/CN2023/114808** |

### A. CLASSIFICATION OF SUBJECT MATTER

H04B7/06(2006.01)i

According to International Patent Classification (IPC) or to both national classification and IPC

### B. FIELDS SEARCHED

Minimum documentation searched (classification system followed by classification symbols)

IPC: H04B7/-

Documentation searched other than minimum documentation to the extent that such documents are included in the fields searched

Electronic data base consulted during the international search (name of data base and, where practicable, search terms used)

CNTXT; WPABSC; ENTXTC; CNKI: 第一, 主, 第二, 次, 频带, 频段, CSI, 信道状态指示, 信道信息, 编码, 解码, 压缩, 相关, 关联, 对应, 人工智能, 模型; WPABS; ENTXT; DWPI; 3GPP; IEEE: first, master, second, slave, frequency band?, CSI, channel information, correlat+, relat+, depend+, encod+, decod+, compress+, AI, model

### C. DOCUMENTS CONSIDERED TO BE RELEVANT

| Category* | Citation of document, with indication, where appropriate, of the relevant passages | Relevant to claim No. |
| --- | --- | --- |
| A | CN 114556874 A (SAMSUNG ELECTRONICS CO., LTD.) 27 May 2022 (2022-05-27) entire document | 1-39 |
| A | CN 114667758 A (ZTE CORP.) 24 June 2022 (2022-06-24) entire document | 1-39 |
| A | CN 111082841 A (ZTE CORP.) 28 April 2020 (2020-04-28) entire document | 1-39 |
| A | CN 109600193 A (HUAWEI TECHNOLOGIES CO., LTD.) 09 April 2019 (2019-04-09) entire document | 1-39 |
| A | US 2021243632 A1 (QUALCOMM, INC.) 05 August 2021 (2021-08-05) entire document | 1-39 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **23 October 2023** | **23 October 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/114808**

| Patent document cited in search report | | | Publication date (day/month/year) | Patent family member(s) | | | Publication date (day/month/year) |
|---|---|---|---|---|---|---|---|
| CN | 114556874 | A | 27 May 2022 | WO | 2021086045 | A1 | 06 May 2021 |
| | | | | KR | 20210051011 | A | 10 May 2021 |
| | | | | EP | 4022860 | A1 | 06 July 2022 |
| | | | | EP | 4022860 | A4 | 05 October 2022 |
| | | | | US | 2021126688 | A1 | 29 April 2021 |
| | | | | IN | 202237023481 | A | 08 July 2022 |
| CN | 114667758 | A | 24 June 2022 | WO | 2021102954 | A1 | 03 June 2021 |
| | | | | KR | 20220080004 | A | 14 June 2022 |
| | | | | US | 2022286261 | A | 08 September 2022 |
| | | | | EP | 4066533 | A1 | 05 October 2022 |
| | | | | EP | 4066533 | A4 | 30 November 2022 |
| CN | 111082841 | A | 28 April 2020 | WO | 2021027868 | A1 | 18 February 2021 |
| | | | | EP | 4016862 | A1 | 22 June 2022 |
| | | | | EP | 4016862 | A4 | 19 October 2022 |
| | | | | US | 2022321187 | A1 | 06 October 2022 |
| CN | 109600193 | A | 09 April 2019 | WO | 2019062491 | A1 | 04 April 2019 |
| | | | | US | 2020260312 | A1 | 13 August 2020 |
| | | | | US | 11290906 | B2 | 29 March 2022 |
| | | | | EP | 3672317 | A1 | 24 June 2020 |
| | | | | EP | 3672317 | A4 | 26 August 2020 |
| | | | | CN | 109600193 | B | 26 October 2021 |
| US | 2021243632 | A1 | 05 August 2021 | EP | 4098025 | A1 | 07 December 2022 |
| | | | | WO | 2021155024 | A1 | 05 August 2021 |
| | | | | CN | 115039441 | A | 09 September 2022 |
| | | | | IN | 202227036889 | A | 21 October 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211036042